(19) **Europäisches Patentamt**
**European Patent Office**
**Office européen des brevets**

(11) **EP 3 995 677 B1**

(12) **EUROPEAN PATENT SPECIFICATION**

(45) Date of publication and mention
of the grant of the patent:
**12.11.2025  Bulletin 2025/46**

(51) International Patent Classification (IPC):
**F01N 3/20** *(2006.01)*       **F01N 9/00** *(2006.01)*
**F01N 13/00** *(2010.01)*       **F01N 3/10** *(2006.01)*

(21) Application number: **21206487.7**

(22) Date of filing: **04.11.2021**

(52) Cooperative Patent Classification (CPC):
**F01N 3/208; F01N 3/101; F01N 9/005;**
**F01N 13/0093;** F01N 2430/06; F01N 2560/021;
F01N 2560/023; F01N 2560/026; F01N 2610/03;
F01N 2900/08; F01N 2900/1402; F01N 2900/1614;
F01N 2900/1616; F01N 2900/1621; Y02T 10/12;
(Cont.)

(54) **CONTROL DEVICE OF AFTER-TREATMENT SYSTEM, AFTER-TREATMENT SYSTEM, METHOD OF CONTROLLING AFTER-TREATMENT SYSTEM, AND COMPUTER PROGRAM**

STEUERUNGSVORRICHTUNG EINES NACHBEHANDLUNGSSYSTEMS,
NACHBEHANDLUNGSSYSTEM, VERFAHREN ZUR STEUERUNG DES
NACHBEHANDLUNGSSYSTEMS UND COMPUTERPROGRAMM

DISPOSITIF DE COMMANDE D'UN SYSTÈME DE POST-TRAITEMENT, SYSTÈME DE
POST-TRAITEMENT, PROCÉDÉ DE COMMANDE D'UN SYSTÈME DE POST-TRAITEMENT ET
PROGRAMME INFORMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **06.11.2020  JP 2020185790**
**08.10.2021  JP 2021165891**

(43) Date of publication of application:
**11.05.2022  Bulletin 2022/19**

(73) Proprietors:
• **Kabushiki Kaisha Toyota Chuo Kenkyusho**
**Nagakute-shi, Aichi 480-1192 (JP)**
• **KABUSHIKI KAISHA TOYOTA JIDOSHOKKI**
**Kariya-shi, Aichi-ken 448-8671 (JP)**

(72) Inventors:
• **IKEDO, Takato**
**Nagakute-shi, 480-1192 (JP)**

• **UEDA, Matsuei**
**Nagakute-shi, 480-1192 (JP)**
• **INAGAKI, Hideto**
**Nagakute-shi, 480-1192 (JP)**
• **MASUI, Kento**
**Kariya-shi, 448-8671 (JP)**
• **TAKAHASHI, Junichi**
**Kariya-shi, 448-8671 (JP)**
• **KONDO, Kazuya**
**Kariya-shi, 448-8671 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**DE-A1- 102016 102 436     DE-T5- 112013 004 471**
**US-A1- 2018 274 419**

EP 3 995 677 B1

(52) Cooperative Patent Classification (CPC): (Cont.)
     Y02T 10/40

**Description**

Cross-Reference to related Applications

The present application claims priority from Japanese patent application 2020-185790 filed on November 6, 2020, and Japanese patent application 2021-165891 filed on October 8, 2021.

Field

The present disclosure relates to a technique of controlling an after-treatment system.

Background

There are known techniques of converting harmful substances contained in exhaust emission discharged from an internal combustion engine or the like. For example, JP 2020-504260A, US Patent No. 8230677B, JP 2015-81602A, and JP 2003-328732A disclose after-treatment systems that use $NH_3$ (ammonia) as an additive and that use an SCR catalyst (Selective Catalytic Reduction catalyst) to convert NOx (nitrogen oxides) as harmful substances. JP 2020-504260A describes a configuration that a hydrolysis catalyst is provided upstream of an SCR catalyst. US Patent No. 8230677B describes a configuration that an NOx detector is provided at an outlet of a main flow path, which exhaust emission flows through, and that a detection signal of the NOx detector is input into a control unit configured to control the amount of the additive. JP 2015-81602A describes a configuration that a first gas sensor and a second gas sensor are provided in a main flow path and that a NOx concentration in the main flow path is estimated from detection signals of the first and the second gas sensors. JP 2003-328732A describes a configuration that pieces of information with regard to an engine (an ambient humidity, a manifold pressure, a manifold temperature, a fuel consumption rate, and an engine rotation speed) are input into a neural network (NN) and that the NN estimates an amount of NOx discharged from the SCR catalyst.

The after-treatment system using the SCR catalyst is provided with a supply portion configured to supply an aqueous urea solution as a source of the additive ($NH_3$) to the SCR catalyst. This supply portion may, however, fail to supply a required amount of the additive according to a command value from a supply controller, due to a hardware variation (for example, manufacturing error of an injection valve, a pump unit or the like) or due to aging deterioration. In other words, even when one identical command value is sent to a plurality of different supply portions, there may be a difference between an actual supply amount of the additive by one supply portion and an actual supply amount of the additive by another supply portion, due to the hardware variations of the respective supply portions and different degrees of deterioration of the respective supply portions. In such cases, the SCR catalyst fails to achieve a target level of conversion performance and has the lowered NOx conversion rate. Accordingly, there has been a demand for the supply controller to control the supply amount of the additive in consideration of such "a variation in the supply portion". None of the techniques described in JP 2020-504260A, US Patent No. 8230677B, JP 2015-81602A, and JP 2003-328732Ahas, however, taken into consideration such a variation in the supply portion.

In some cases, a NOx concentration in the exhaust emission on the downstream side of the SCR catalyst (hereinafter may be referred to as "outlet NOx concentration" and "outlet harmful substance concentration" may be used for determination of the command value that is to be sent to the supply portion. Like the supply portion, a sensor configured to measure this outlet NOx concentration may have an error due to a hardware variation, aging deterioration or the like. Such an error may be a factor of reducing the accuracy of estimation of the state quantity (i.e., the adsorption amount of $NH_3$ by the SCR catalyst and the gain value indicating a variation in the supply portion) calculated for determination of the command value. Accordingly, there has been a demand for enhancing the robustness of the estimated value of the state quantity against the error of the sensor configured to measure the outlet NOx concentration.

Such a problem is not limited to the after-treatment system that controls the exhaust emission from the internal combustion engine but is generally found in any after-treatment system that controls the exhaust emission containing harmful substances. Additionally, such a problem is not limited to the system of supplying the aqueous urea solution but is also found in a system of supplying $NH_3$ gas. Furthermore, such a problem is not limited to the SCR catalyst that uses $NH_3$ as the additive but is also found in an NSR catalyst (NOx Storage Reduction catalyst) that uses CO (carbon monoxide), $H_2$ (hydrogen), and HC (hydrocarbons) produced by a rich spike process, as the additive, as well as in a three-way catalyst that uses $O_2$ (oxygen) produced by a redox reaction, as the additive. US2018/274419A1 discloses an exhaust gas purification apparatus for an internal combustion engine.

DE 11 2013 004 471 T5 relates to an exhaust gas treatment device, a diesel engine, and an exhaust gas treatment method.

DE 10 2016 102 436 A1 discloses a urea additive control unit and a learning unit.

**EP 3 995 677 B1**

Summary

In order to solve at least part of the problems described above, in an after-treatment system configured to convert a harmful substance in exhaust emission by using an additive, an object of the present disclosure is to allow for supply of the additive in consideration of a variation in a supply portion that is configured to supply the additive.

This object is achieved by a control device in accordance with claim 1, an after-treatment system in accordance with claim 7, a method of controlling an after-treatment system in accordance with claim 8, and a computer program in accordance with claim 9. Additional aspects disclosed herein are described in the following.

The present disclosure may be implemented by a variety of aspects, for example, a control device of an after-treatment system, an after-treatment system including the control device, control methods of such device and system, computer programs performed in such device and system, a server apparatus configured to deliver such computer programs, and non-transitory storage media configured to store such computer programs therein.

Brief Description of Drawings

Fig. 1 is a block diagram illustrating an after-treatment system according to one embodiment of the present disclosure;
Fig. 2 is a diagram illustrating a third model;
Fig. 3 is a flowchart showing a procedure of processing performed by a control device;
Fig. 4 is a block diagram illustrating an after-treatment system according to a second embodiment;
Fig. 5 is a flowchart showing a procedure of processing performed by the control device according to the second embodiment;
Fig. 6 is a block diagram illustrating an after-treatment system according to a third embodiment;
Fig. 7 is a block diagram illustrating an after-treatment system according to a fourth embodiment;
Fig. 8 is a flowchart showing a procedure of processing performed by a control device according to the fourth embodiment;
Fig. 9 is a diagram illustrating variations of a supply portion and an outlet NOx concentration acquirer; and
Fig. 10 is a diagram illustrating one example of the results of simulation using an after-treatment system.

Description of Embodiments

<First Embodiment>

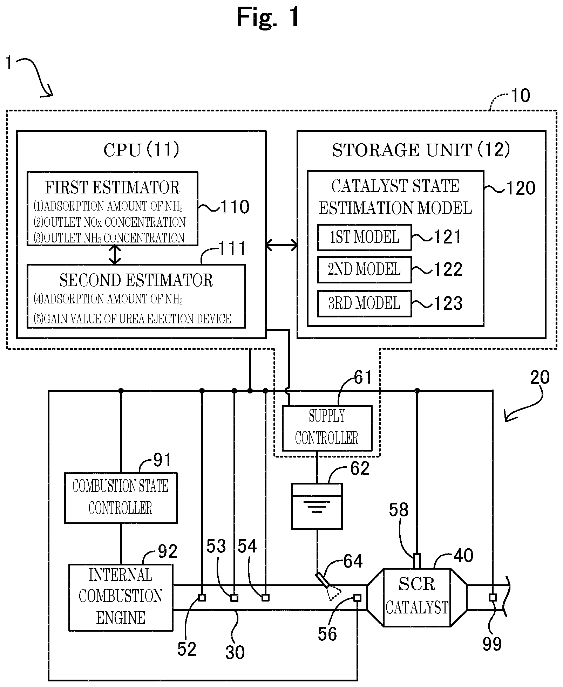

Fig. 1 is a block diagram illustrating an after-treatment system 1 according to one embodiment of the present disclosure. The after-treatment system 1 of this embodiment includes a control device 10 and an exhaust emission control device 20. The control device 10 of this embodiment is configured to supply an additive in consideration of a variation in a supply portion (a urea pump unit 62 and a urea nozzle 64) by a treatment described later. The exhaust emission control device 20 of the embodiment is a device configured to convert harmful substances (nitrogen oxides: NOx) contained in the exhaust emission of an internal combustion engine 92. The following illustrates the exhaust emission control device 20 that is provided with an SCR catalyst (Selective Catalytic Reduction catalyst) 40 as a catalyst and that uses $NH_3$ (ammonia) as an additive.

The internal combustion engine 92 is, for example, a diesel engine or a lean-burn operation gasoline engine. A combustion state controller 91 is configured to control an intake air flow rate and injection of a fuel into the internal combustion engine 92 and thereby control the air-fuel ratio in the internal combustion engine 92 to one of the lean state, the stoichiometric state, and the rich state. The combustion state controller 91 is implemented by, for example, an ECU (Electronic Control Unit). In the description below, in the exhaust emission control device 20, a side nearer to the internal combustion engine 92 is called the "upstream side", and a side farther from the internal combustion engine 92 is called the "downstream side". In Fig. 1, a left side corresponds to the upstream side, and a right side corresponds to the downstream side. The exhaust emission control device 20 may be connected with another apparatus or equipment configured to discharge an exhaust gas containing harmful substances (for example, a factory or a variety of combustion apparatuses and equipment), in place of the internal combustion engine 92.

The exhaust emission control device 20 includes an exhaust pipe 30 connected with the internal combustion engine 92, an SCR catalyst 40 provided on the exhaust pipe 30, a urea pump unit 62, and a urea nozzle 64. The exhaust pipe 30 forms a main flow path which the exhaust emission from the internal combustion engine 92 flows through. The exhaust emission from the internal combustion engine 92 flows through the main flow path in the exhaust pipe 30, passes through the SCR catalyst 40, and is then released to the outside air. The SCR catalyst 40 receives a supply of the additive and converts NOx in the exhaust emission. The SCR catalyst 40 corresponds to the "catalyst". The urea pump unit 62

4

stores an aqueous urea solution serving as the additive inside thereof and has a bult-in pump configured to deliver the aqueous urea solution to the urea nozzle 64. The urea nozzle 64 is an injection port of the aqueous urea solution and is provided on the upstream side of the SCR catalyst 40 to supply the aqueous urea solution to the SCR catalyst 40. The urea pump unit 62 and the urea nozzle 64 correspond to the "supply portion". The urea nozzle 64 is also called the "injection valve".

The control device 10 includes a CPU 11, a supply controller 61, a storage unit 12, a flow rate acquirer 52, an exhaust temperature acquirer 53, a NOx concentration acquirer 54, a front-end temperature acquirer 56, a temperature acquirer 58, and an outlet NOx concentration acquirer 99. The CPU 11, the storage unit 12, and the supply controller 61 are implemented by, for example, an ECU.

The CPU 11 loads and executes a computer program, which is stored in a ROM, on a RAM to control the respective portions of the control device 10. The CPU 11 also serves as a first estimator 110 and a second estimator 111.

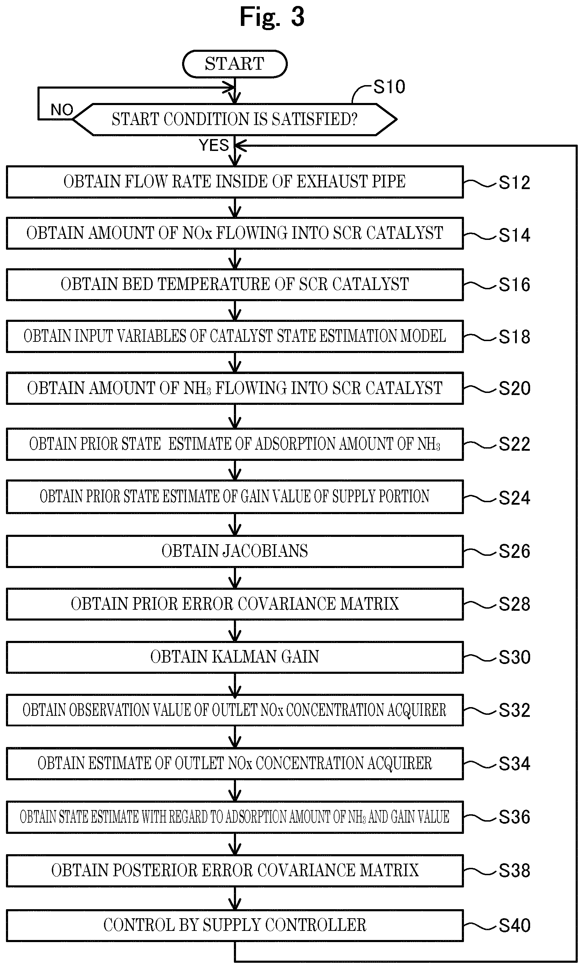

The first estimator 110 uses a catalyst state estimation model 120 described later to estimate an adsorption amount of $NH_3$ adsorbed to the SCR catalyst 40. In the description below, the adsorption amount of $NH_3$ by the SCR catalyst 40 estimated by the first estimator 110 is also called the "first adsorption amount". Moreover, in the processing of Fig. 3, the first estimator 110 uses an estimation result (a NOx conversion rate) of a first model 121 to estimate an outlet NOx concentration that is the concentration of NOx at an outlet of the exhaust pipe 30 (in other words, on the downstream side of the SCR catalyst 40). Furthermore, in the processing of Fig. 3, the first estimator 110 uses an estimation result (an outflow amount of $NH_3$) of a second model 122 to estimate an outlet $NH_3$ concentration that is a concentration of $NH_3$ at the outlet of the exhaust pipe 30. The outlet NOx concentration corresponds to the "outlet harmful substance concentration", and the outlet $NH_3$ concentration corresponds to the "outlet additive concentration".

In the processing of Fig. 3, the second estimator 111 estimates an adsorption amount of $NH_3$ adsorbed to the SCR catalyst 40 and a gain value indicating a variation in the supply portion. In the description below, the adsorption amount of $NH_3$ by the SCR catalyst 40 estimated by the second estimator 111 is also called the "second adsorption amount". The "gain value indicating the variation in the supply portion" is a value indicating a degree of variation from a median value in the supply portion. The gain value indicating the variation in the supply portion is caused by manufacturing errors (hardware variations) of the urea pump unit 62 and the urea nozzle 64 and aged deterioration of the urea pump unit 62 and the urea nozzle 64. In the description below, the gain value indicating the variation in the supply portion is also simply called the "gain value".

The supply controller 61 controls supply (for example, a supply amount, a supply cycle, a concentration and the like) of the aqueous urea solution that is supplied from the urea pump unit 62 and that is injected from the urea nozzle 64, so as to control supply of $NH_3$ as the additive. More specifically, the supply controller 61 of the embodiment performs supply control (for example, the supply amount, the supply cycle, the concentration and the like) of the aqueous urea solution according to the second adsorption amount and the gain value estimated by the second estimator 111. The details will be described later.

The flow rate acquirer 52 obtains a flow rate of the exhaust emission from the internal combustion engine 92. For example, the flow rate acquirer 52 may be configured to obtain a measurement signal indicating a measurement by a pitot tube flow meter provided in the exhaust pipe 30. In another example, the flow rate acquirer 52 may be configured to estimate the flow rate of the exhaust emission from an intake air flow signal and a fuel injection amount signal to the internal combustion engine 92. The exhaust temperature acquirer 53 is a sensor configured to measure the temperature of the exhaust emission from the internal combustion engine 92. The NOx concentration acquirer 54 is a sensor configured to measure a NOx concentration in the exhaust emission flowing into the SCR catalyst 40.

The front-end temperature acquirer 56 is a sensor configured to measure the temperature in the vicinity of an inlet (at a front end) of the SCR catalyst 40. The temperature acquirer 58 is a sensor configured to measure the bed temperature of the SCR catalyst 40. The outlet NOx concentration acquirer 99 is a sensor configured to measure the NOx concentration in the exhaust emission at the outlet of the exhaust pipe 30 (in other words, on the downstream side of the SCR catalyst 40). The outlet NOx concentration acquirer 99 corresponds to the "outlet concentration acquirer". The NOx concentration acquirer 54 may be configured to estimate the NOx concentration in the exhaust emission from the combustion state (lean, stoichiometric or rich state) of the internal combustion engine 92, instead of the sensor measurement.

The flow rate acquirer 52, the exhaust temperature acquirer 53, and the NOx concentration acquirer 54 are also collectively called the "second acquirer" that is configured to obtain information of the exhaust emission flowing into the SCR catalyst 40. The front-end temperature acquirer 56 and the temperature acquirer 58 are also collectively called the "first acquirer" that is configured to obtain information of the SCR catalyst 40.

The storage unit 12 is configured by, for example, a flash memory, a memory card, or a hard disk. A catalyst state estimation model 120 is stored in advance in the storage unit 12. The catalyst state estimation model 120 includes a first model 121, a second model 122 and a third model 123.

The first model 121 is a model used to estimate a "NOx conversion rate" in the SCR catalyst 40 and is configured by a machine learning model or more specifically by an NN (Neural Network). For example, at least one or more of parameters shown in items a1 to a3 given below may be employed as input variables of the first model 121. An output variable of the first model 121 is an estimate of the NOx conversion rate of the SCR catalyst 40 under all the conditions specified by the input variables:

(a1) information of the catalyst: at least one of the temperature of the front end of the SCR catalyst 40, the temperature of the SCR catalyst 40, and an adsorption amount of $NH_3$ adsorbed to the SCR catalyst 40 at a time one time period before;

(a2) information of the exhaust emission: at least one of the temperature of the exhaust emission, the flow rate of the exhaust emission and an amount of NOx contained in the exhaust emission from the internal combustion engine 92; and

(a3) information of the additive: an inflow amount of $NH_3$ flowing into the SCR catalyst 40.

The second model 122 is a model used to estimate an "outflow amount of $NH_3$" flowing out from the SCR catalyst 40 and is configured by a machine learning model or more specifically by an NN. For example, at least one or more of parameters shown in items b1 to b3 given below may be employed as input variables of the second model 122. An output variable of the second model 122 is an estimate of the outflow amount of $NH_3$ flowing out from the SCR catalyst 40 under all the conditions specified by the input variables:

(b1) information of the catalyst: at least one of the temperature of the front end of the SCR catalyst 40, the temperature of the SCR catalyst 40, an adsorption amount of $NH_3$ adsorbed to the SCR catalyst 40 (actual adsorption amount) at the time one time period before, a time derivative value of the temperature of the SCR catalyst 40, and a ratio of the adsorption amount (actual adsorption amount) of $NH_3$ to a saturated adsorption amount of $NH_3$ in the SCR catalyst 40;

(b2) information of the exhaust emission: at least one of the temperature of the exhaust emission, the flow rate of the exhaust emission and the amount of NOx contained in the exhaust emission from the internal combustion engine 92; and

(b3) information of the additive: the inflow amount of $NH_3$ flowing into the SCR catalyst 40.

In the first model 121 and the second model 122, a relationship between the input variables and the output variable is learnt by the NN, and a weighting constant and the like in the NN are determined in advance, with a view to making the output variable equal to a physical quantity that is an object of estimation. It is preferable to use data obtained during a transient operation of the internal combustion engine 92 as learning data for learning of the first model 121 and the second model 122.

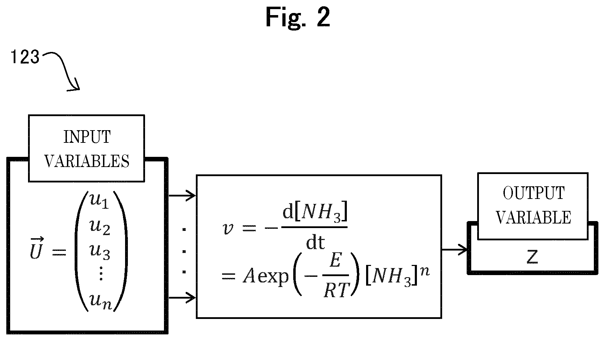

Fig. 2 is a diagram illustrating the third model 123. The third model 123 is a model used to estimate an "amount of $NH_3$ that does not contribute to NOx conversion reaction" in the SCR catalyst 40 and is configured by a physical model. It is known that $NH_3$ serving as the additive is lost by pyrolysis and an oxidation reaction especially in a high temperature environment and does not contribute to the NOx conversion reaction in the SCR catalyst 40. The third model 123 estimates the amount of $NH_3$ that is decreased by such pyrolysis and oxidation reaction, as the amount of the additive that does not contribute to the NOx conversion reaction. As shown in Fig. 2, the third model 123 is configured by the Arrhenius equation. In the Arrhenius equation, values experimentally or otherwise determined in advance may be used as a frequency factor (A) and an activation energy (E). For example, at least one or more of parameters shown in items c1 to c3 given below may be employed as input variables of the third model 123. An output variable Z of the third model 123 is an estimate of the amount of $NH_3$ that does not contribute to the NOx conversion reaction in the SCR catalyst 40 under all the conditions specified by the input variables (a vector U):

(c1) information of the catalyst: at least one of the temperature of the front end of the SCR catalyst 40 and the temperature of the SCR catalyst 40;

(c2) information of the exhaust emission: the temperature of the exhaust emission from the internal combustion engine 92; and

(c3) information of the additive: the inflow amount of $NH_3$ flowing into the SCR catalyst 40.

The catalyst state estimation model 120 is a model used to determine an estimate of the adsorption amount of $NH_3$ adsorbed to the SCR catalyst 40 at a time one time period after. The catalyst state estimation model 120 is configured by Mathematical Expression 1 given below:
[Math. 1]

$$NH_3Ad[k+1] = NH_3Ad[k] + (NH_3\_SCR_{in}[k] - NH_3\_SCR_{out}[k]) - (NOxConv[k]/100) \times NOx\_SCR_{in}[k] - NH_3\_thrmlytc[k] \tag{1}$$

Items d1 to d7 given below denote the respective values of Mathematical Expression 1:

(d1) $NH_3Ad[k+1]$: an estimate of the adsorption amount of $NH_3$ adsorbed to the SCR catalyst 40 at the time one time period after;
(d2) $NH_3Ad[k]$: an adsorption amount of $NH_3$ (actual adsorption amount) obtained as a result of a previous estimation process;
(d3) $NH_{3\_}SCR_{in}[k]$: an inflow amount of $NH_3$ flowing into the SCR catalyst 40;
(d4) $NH_{3\_}SCR_{out}[k]$: an outflow amount of $NH_3$ flowing out from the SCR catalyst 40, which is estimated by the second model 122;
(d5) $NOxConv[k]$: a NOx conversion rate of the SCR catalyst 40, which is estimated by the first model 121;
(d6) $NOx\_SCR_{in}[k]$: an amount of NOx contained in the exhaust emission flowing into the SCR catalyst 40; and
(d7) $NH_{3\_}thrmlytc[k]$: an amount of $NH_3$ that does not contribute to the NOx conversion reaction, which is estimated by the third model 123.

In Mathematical Expression 1, a time t= kΔt denotes a current time, a time t= (k+1)Δt denotes a time one time period after (one unit time after), a time t= (k-1)Δt denotes a time one time period before (one unit time before), k denotes an integral number, and Δt denotes a unit time in the control device 10 (for example, an operation period of the CPU 11, a sampling period of each of the acquirers 52 to 58 described above). These are similarly applied to the description of Fig. 3 and subsequent drawings.

The first estimator 110 uses the first model 121 to estimate the NOx conversion rate, $NOxConv[k]$. The first estimator 110 also uses the second model 122 to estimate the outflow amount of $NH_3$, $NH_{3\_}SCR_{out}[k]$, and uses the third model 123 to estimate the amount of $NH_3$ that does not contribute to the NOx conversion reaction, $NH_{3\_}thrmlytc[k]$. The first estimator 110 subsequently inputs the results of these estimations and the obtained values by the flow rate acquirer 52 and the like into the catalyst state estimation model 120 (Mathematical Expression 1), so as to determine the estimate $NH_3Ad[k+1]$ with regard to the adsorption amount of $NH_3$ adsorbed to the SCR catalyst 40 at the time one time period after. The adsorption amount of $NH_3$ estimated by the catalyst state estimation model 120 , $NH_3Ad[k]$ or $NH_3Ad[k+1]$, corresponds to the "first adsorption amount".

As described above, the catalyst state estimation model 120 is configured by a mathematical model. The catalyst state estimation model 120 is a model configured to use the results of the estimations (the NOx conversion rate and the outflow amount of $NH_3$) by the first model 121 and the second model 122 that are the NN models (machine learning models), in combination with the result of the estimation (the amount of $NH_3$ that does not contribute to the NOx conversion reaction) by the third model 123 that is the physical model, so as to estimate the adsorption amount of $NH_3$ adsorbed to the SCR catalyst 40, $NH_3Ad[k+1]$, at the time one time period after (at the time t= (k+1)Δt) by using the laws of physics. Using this catalyst state estimation model 120 enables the first estimator 110 to perform estimation of the adsorption amount of $NH_3$, $NH_3Ad[k+1]$, which is affected by a wide variety of factors (for example, the factors listed in the items a1 to a3, b1 to b3 and c1 to c3), at a high speed with high accuracy, while satisfying the laws of physics.

Furthermore, the adsorption amount of $NH_3$ in the SCR catalyst 40 is varied by the effect of the adsorption amount of $NH_3$ at the previous time (in other words, varied by the effect of time history). The catalyst state estimation model 120 uses the result of the estimation, $NH_3Ad[k]$, at the current time k by the first, the second and the third models 121, 122, and 123 to estimate the adsorption amount of $NH_3$, $NH_3Ad[k+1]$, at the next time k+1. This configuration accordingly enables the first estimator 110 to estimate the adsorption amount of $NH_3$ at the next time with high accuracy, in consideration of the adsorption amount of $NH_3$ in the SCR catalyst 40 at the previous time.

Fig. 3 is a flowchart showing a procedure of processing performed by the control device 10. The processing shown in Fig. 3 is a process of estimating the adsorption amount of $NH_3$ in the SCR catalyst 40 and controlling supply of $NH_3$ by the supply controller 61. The processing shown in Fig. 3 may be performed at any arbitrary timing and, for example, may be performed repeatedly after a start of the internal combustion engine 92. The processing shown in Fig. 3 may be performed in response to a request from the user of the after-treatment system 1 or may be performed in response to a request from another controller provided in a vehicle or the like with the after-treatment system 1 mounted thereon.

At step S10, the second estimator 111 determines whether a processing start condition is satisfied. More specifically, for example, the second estimator 111 determines that the processing start condition is satisfied when the temperature acquirer 58 is normal, both the urea pump unit 62 and the urea nozzle 64 are normal, and both the NOx concentration acquirer 54 and the outlet NOx concentration acquirer 99 are active. When the start condition is satisfied (step S10: YES), the second estimator 111 proceeds to step S12. When the start condition is not satisfied (step S10: NO), on the other hand, the second estimator 111 waits until satisfaction of the start condition.

At step S12, the second estimator 111 obtains a flow rate $Q[k]$ inside of the exhaust pipe 30 at the current time (at the time t= kΔt) from the flow rate acquirer 52. At step S14, the second estimator 111 obtains an amount of NOx flowing into the SCR catalyst 40, $NOx\_SCR_{in}[k]$, at the current time (at the time t= kΔt). More specifically, the second estimator 111 obtains a current NOx concentration [k] in the exhaust emission flowing into the SCR catalyst 40 from the NOx concentration acquirer 54. The second estimator 111 subsequently calculates an amount of NOx, NOx_SCR$_{in}$[k], from the obtained NOx concentration [k] in the exhaust emission and the flow rate Q[k] of the exhaust emission obtained at step S12. At step S16, the second estimator 111 obtains a bed temperature T[k] of the SCR catalyst 40 at the current time (at the time t= k$\Delta$t) from the temperature acquirer 58.

At step S18, the second estimator 111 obtains input variables u[k-1] of the catalyst state estimation model 120 in an estimation process performed by the first estimator 110 at the time one time period before (at the time t= (k-1)$\Delta$t). More specifically, the second estimator 111 obtains input variables d2 to d7 of the catalyst state estimation model 120 at the time one time period before shown below:

(d2) NH$_3$Ad[k-1]: an adsorption amount of NH$_3$ (actual adsorption amount);
(d3) NH$_3$_SCR$_{in}$[k-1]: an inflow amount of NH$_3$ flowing into the SCR catalyst 40;
(d4) NH$_3$_SCR$_{out}$[k-1]: an outflow amount of NH$_3$ estimated by the second model 122;
(d5) NOxConv[k-1]: a NOx conversion rate estimated by the first model 121;
(d6) NOx_SCR$_{in}$[k-1]: an amount of NOx in the exhaust emission flowing into the SCR catalyst 40; and
(d7) NH$_3$_thrmlytc[k-1]: an amount of NH$_3$ that does not contribute to the NOx conversion reaction, which is estimated by the third model 123.

At step S20, the second estimator 111 obtains an amount of NH$_3$ flowing into the SCR catalyst 40. More specifically, the second estimator 111 obtains respective values shown in items e1 and e2 given below. The second estimator 111 subsequently obtains the amount of NH$_3$ flowing into the SCR catalyst 40, NH$_3$_SCR$_{in}$[k-1], at the time one time period before (at the time t= (k-1)$\Delta$t), from an actual injection amount of urea shown in an item e3 given below. The second estimator 111 may obtain a command value Urea[k-1] in the item e1 from the supply controller 61. The second estimator 111 may use any initial value in a first cycle of the processing and use a gain value determined by a previous cycle of the processing in a second or subsequent cycle of the processing, as a gain value K$_{inj}$[k-1] in the item e2:

(e1) Urea[k-1]: a command value of the injection amount of urea to the supply portion at the time one time period before (at the time t= (k-1)$\Delta$t);
(e2) K$_{inj}$[k-1]: a gain value indicating a variation in the supply portion; and
(e3) Urea[k-1] $\times$ K$_{inj}$[k-1]: an actual injection amount of urea.

The second estimator 111 subsequently estimates the adsorption amount of NH$_3$ and the gain value indicating the variation in the supply portion by using a state estimation theory. The following describes an example in which the second estimator 111 uses an extended Kalman filter (EKF) as a state estimator that implements the state estimation theory. The extended Kalman filter is an algorithm of determining an estimate that minimizes a mean squared error of a state quantity when the mean squared error is used as an evaluation function. The second estimator 111 may alternatively use another similar algorithm, for example, an unscented Kalman filter (UKF), a sigma point Kalman filter, or a particle filter.

At step S22, the second estimator 111 obtains a prior state estimate of the adsorption amount of NH$_3$. More specifically, the second estimator 111 inputs a vector x[k-1] expressed by Mathematical Expression 2 and the input variables u[k-1] obtained at step S18, into a model f$_1$(.) shown in a right term of Mathematical Expression 3, so as to obtain a prior state estimate x^$_1^-$[k] (a left term of Mathematical Expression 3) with regard to the adsorption amount of NH$_3$ at the current time (at the time t= k$\Delta$t). The second estimator 111 may use any initial value in a first cycle of the processing and use an estimate estimated by the second estimator 111 at the time one time period before in a second or subsequent cycle of the processing, as an adsorption amount of NH$_3$, m$_{ad, NH3}$ in a right term of Mathematical Expression 2. The second estimator 111 may also use any initial value in a first cycle of the processing and use a gain value determined by a previous cycle of the processing (at step S24 in Fig. 3) in a second or subsequent cycle of the processing, as a gain value K$_{inj}$ in the right term of Mathematical Expression 2:

[Math. 2]

$$x = \begin{bmatrix} m_{Ad,NH3} \\ K_{inj} \end{bmatrix} \qquad \cdots (2)$$

[Math. 3]

$$\hat{x}_1^-(k) = f_1\big(\hat{x}(k-1), u(k-1)\big) \qquad \cdots (3)$$

At step S24, the second estimator 111 obtains a prior state estimate of the gain value indicating the variation in the supply portion. More specifically, the second estimator 111 inputs the gain value K$_{inj}$[k-1] at the time one time period before (at the time t= (k-1)Δt) into a model f2(.) expressed by Mathematical Expression 4, so as to obtain a prior state estimate x^$_2^-$[k] (a left term of Mathematical Expression 4) of the gain value at the current time (at the time t= kΔt):
[Math. 4]

$$\hat{x}_2^-(k) = f_2\big(\hat{x}_2(k-1)\big) \qquad \cdot\;\cdot\;\cdot\;(4)$$

At step S26, the second estimator 111 obtains a Jacobian F[k-1] and a Jacobian H[k] with respect to f= [f$_1$, f$_2$]$^T$. More specifically, the second estimator 111 calculates the Jacobian F[k-1] according to Mathematical Expression 5. The second estimator 111 also calculates the Jacobian H[k] according to Mathematical Expression 6:
[Math. 5]

$$\boldsymbol{F}(k-1) = \left.\frac{\partial f}{\partial x}\right|_{x=\hat{x}(k-1)} = \begin{bmatrix} F_{11} & F_{12} \\ F_{21} & F_{22} \end{bmatrix} \qquad \cdot\;\cdot\;\cdot\;(5)$$

[Math. 6]

$$\boldsymbol{H}(k) = \left.\frac{\partial h}{\partial x}\right|_{x=\hat{x}^-(k)} = \begin{bmatrix} H_{11} & H_{12} \end{bmatrix} \qquad \cdot\;\cdot\;\cdot\;(6)$$

At step S28, the second estimator 111 obtains a prior error covariance matrix P⁻[k] according to Mathematical Expression 7:
[Math. 7]

$$\boldsymbol{P}^-(k) = \boldsymbol{F}(k-1)\boldsymbol{P}(k-1)\boldsymbol{F}^T(k-1) + \boldsymbol{Q}_k \qquad \cdot\;\cdot\;\cdot\;(7)$$

At step S30, the second estimator 111 obtains a Kalman gain G[k] according to Mathematical Expression 8:
[Math. 8]

$$\boldsymbol{G}(k) = \boldsymbol{P}^-(k)\boldsymbol{H}^T(k)[\boldsymbol{H}(k)\boldsymbol{P}^-(k)\boldsymbol{H}^T(k) + R_k]^{-1} \qquad \cdot\;\cdot\;\cdot\;(8)$$

At step S32, the second estimator 111 obtains an observation value y[k] of the outlet NOx concentration acquirer 99. The observation value of the outlet NOx concentration acquirer 99 is an actual measurement value of the NOx concentration at the outlet of the exhaust pipe 30 (in other words, on the downstream side of the SCR catalyst 40).

At step S34, the second estimator 111 obtains an estimate h(x^⁻ [k]) of the outlet NOx concentration acquirer 99. More specifically, the second estimator 111 obtains respective values shown in items f1 and f2 given below from the first estimator 110. The second estimator 111 subsequently inputs the obtained values f1 and f2 into Mathematical Expression 9, so as to obtain an estimate of the outlet NOx concentration acquirer 99 (a left term in Mathematical Expression 9) at the current time (at the time t= kΔt). The estimate h(x^⁻[k]) of the outlet NOx concentration acquirer 99 means an estimate of the NOx concentration that is expected to be obtained by the outlet NOx concentration acquirer 99 and may thus not be equal to the actual measurement value of the outlet NOx concentration acquirer 99.
[Math. 9]

$$h\big(\hat{x}^-(k)\big) = \hat{C}_{NOxSensor,DS}(k)\big(= \widehat{NO}_{x,DS}(k) + \widehat{NH}_{3,DS}(k)\big) \qquad \cdot\;\cdot\;\cdot\;(9)$$

(f1) outlet NOx concentration NO^$_{x,DS}$[k]: This is an estimate of the NOx concentration at the outlet of the exhaust pipe 30 (in other words, on the downstream side of the SCR catalyst 40) and corresponds to the "outlet harmful substance concentration". The following describes a procedure by which the first estimator 110 estimates the outlet NOx concentration (the outlet harmful substance concentration) that is the concentration of NOx at the outlet of the exhaust pipe 30. In general, the NOx conversion rate is calculable by using an equation given below. The first estimator 110 accordingly estimates the outlet NOx concentration (outlet harmful substance concentration) by inputting the NOx conversion rate estimated by the first model 121 into a "NOx conversion rate" in a left term of the equation given below and inputting the NOx concentration obtained by the NOx concentration acquirer 54 into an "inlet NOx concentration" in a right term of the equation given below:

NOx conversion rate= (inlet NOx concentration - outlet NOx concentration)/ inlet NOx concentration $\times$ 100

(f2) outlet NH$_3$ concentration NH^$_{3,DS}$[k1): This is an estimate of the NH$_3$ concentration at the outlet of the exhaust pipe 30 (in other words, on the downstream side of the SCR catalyst 40) and corresponds to the "outlet additive concentration". The following describes a procedure by which the first estimator 110 estimates the outlet NH$_3$ concentration (outlet additive concentration) that is the concentration of NH$_3$ at the outlet of the exhaust pipe 30. The first estimator 110 estimates the outlet NH$_3$ concentration (outlet additive concentration) by using the outflow amount of NH$_3$ estimated by the second model 122 and the flow rate Q of the exhaust emission inside of the exhaust pipe 30 obtained by the flow rate acquirer 52. According to a modification, the first estimator 110 may estimate the outlet NOx concentration (f1) or the outlet NH$_3$ concentration (f2) by using another procedure (for example, using an NN, a physical model or a map) that is different from the procedure described above.

At step S36, the second estimator 111 inputs the prior state estimate x^$_1$-[k] obtained at step S22, the Kalman gain G[k] obtained at step S30, the observation value y[k] obtained at step S32, and the estimate h(x^- [k]) obtained at step S34, into Mathematical Expression 10, so as to obtain a state estimate x^[k].
[Math. 10]

$$\hat{x}(k) = \hat{x}^-(k) + G(k)\{y(k) - h(\hat{x}^-(k))\} \qquad \cdots (10)$$

As described above with respect to Mathematical Expression 2, the vector x expressed as x^ includes the adsorption amount of NH$_3$, m$_{ad, NH3}$, and the gain value K$_{inj}$ indicating the variation in the supply portion. The second estimator 111 estimates the adsorption amount of NH$_3$, m$_{ad, NH3}$, by using the state estimation theory as described above. This enables the second estimator 111 to determine the adsorption amount of NH$_3$, m$_{ad, NH3}$, with higher accuracy than the adsorption amount of NH$_3$ (first adsorption amount) estimated by the first estimator 110. The adsorption amount of NH$_3$, m$_{ad, NH3}$, obtained at step S36 corresponds to the "second adsorption amount". The second estimator 111 also estimates the gain value K$_{inj}$ by using the state estimation theory. This enables the second estimator 111 to estimate the state quantity that is difficult to actually measure (i.e., the gain value indicating the variation in the supply portion).

At step S38, the second estimator 111 uses Mathematical Expression 11 to obtain a posterior error covariance matrix P[k]. The posterior error covariance matrix P[k] is used in a next cycle of the processing (at step S28):
[Math. 11]

$$P(k) = \{I - G(k)H(k)\}P^-(k) \qquad \cdots (11)$$

At step S40, the second estimator 111 causes the supply controller 61 to perform control. More specifically, the second estimator 111 sends the adsorption amount of NH$_3$, m$_{ad, NH3}$, and the gain value K$_{inj}$ estimated at step S36 to the supply controller 61. The supply controller 61 uses the received adsorption amount of NH$_3$, m$_{ad, NH3}$, and the received gain value K$_{inj}$ to control supply of the additive (the aqueous urea solution) from the supply portion (the urea pump unit 62 and the urea nozzle 64). For example, the supply controller 61 decreases a command value of the supply amount of the aqueous urea solution when the adsorption amount of NH$_3$ is relatively large, while increasing the command value of the supply amount of the aqueous urea solution when the adsorption amount of NH$_3$ is relatively small. In another example, when the estimation from the gain value shows that the supply performance of the additive by the supply portion is relatively deteriorated, the supply controller 61 increases the command value of the supply amount of the aqueous urea solution. When the estimation from the gain value shows that the supply performance of the additive by the supply portion is relatively enhanced, on the other hand, the supply controller 61 decreases the command value of the supply amount of the aqueous urea solution. The supply controller 61 may give a command by using a relational expression, a map or the like provided in advance to indicate a relationship between the adsorption amount of NH$_3$, the gain value, and the command value. According to a modification, the supply controller 61 may increase or decrease a command value of the supply cycle, the concentration or the like, in place of the command value of the supply amount of the aqueous urea solution. The supply controller 61 then returns the processing to step S10, and the control device 10 repeats the above series of processing.

As described above, in the control device 10 of the first embodiment, the supply controller 61 uses the adsorption amount of NH$_3$, m$_{ad, NH3}$ (the second adsorption amount) and the gain value K$_{inj}$ indicating the variation in the supply portion, which are estimated by the second estimator 111, to control the supply of the additive in the supply portion (step S40 in Fig. 3). In the after-treatment system 1, this configuration allows for supply of NH$_3$ (additive) (for example, the supply amount, the supply cycle, the concentration and the like) with taking into account the variation in the supply portion that is configured to supply NH$_3$. As a result, this suppresses a decrease in the conversion rate of NOx (harmful substance) in the SCR catalyst 40. Additionally, the first estimator 110 uses the catalyst state estimation model 120 (mathematical model) to estimate the adsorption amount of NH$_3$, NH$_3$Ad (first adsorption amount). The configuration of incorporating the effects of other catalysts, the exhaust pipe and the like into the catalyst state estimation model 120 in advance enables the first estimator 110 to estimate the adsorption amount of $NH_3$, $NH_3Ad$ with high accuracy, without obtaining information with regard to the other catalysts, the exhaust pipe and the like. Furthermore, the second estimator 111 uses the extended Kalman filter (state estimation theory) to estimate the adsorption amount of $NH_3$, $m_{ad, NH3}$, and the gain value $K_{inj}$. This configuration enables the second estimator 111 to determine the adsorption amount of $NH_3$, $m_{ad, NH3}$ (second adsorption amount) with higher accuracy than the adsorption amount of $NH_3$, $NH_3Ad$ (first adsorption amount), in consideration of the NOx concentration obtained by the outlet NOx concentration acquirer 99 (step S36). This configuration also enables the second estimator 111 to estimate the state quantity that is difficult to actually measure (i.e., the gain value $K_{inj}$ indicating a variation in the supply portion), with taking into account the NOx concentration obtained by the outlet NOx concentration acquirer 99 (step S36).

Moreover, in the control device 10 of the first embodiment, the first estimator 110 uses the first model 121 and the second model 122 (mathematical model) to estimate the conversation rate of NOx in the SCR catalyst 40 and the outflow amount of $NH_3$ flowing out from the SCR catalyst 40 (step S34). Furthermore, the first estimator 110 estimates the outlet harmful substance concentration that is the concentration of NOx at the outlet of the main flow path, from the estimated conversion rate of NOx (step S34: f1). The first estimator 110 also estimates the outlet additive concentration that is the concentration of $NH_3$ at the outlet of the main flow path, from the estimated outflow amount of $NH_3$ (step S34: f2).

Additionally, in the control device 10 of the first embodiment, the second estimator 111 determines the estimate of the NOx concentration that is expected to be obtained by the outlet NOx concentration acquirer 99 (step S34) and corrects the NOx concentration (observed data) obtained by the outlet NOx concentration acquirer 99 with the determined estimate (step S36). As a result, this further optimizes the supply of $NH_3$ by the supply portion and further enhances the conversion rate of NOx in the SCR catalyst 40.

Furthermore, in the control device 10 of the first embodiment, the second estimator 111 employs the algorithm (for example, the extended Kalman filter) of determining the estimate that minimizes the mean squared error of the state quantity when the evaluation value used is the mean squared error, as the state estimation theory. This configuration enables the second estimator 111 to determine the adsorption amount of $NH_3$, $m_{ad, NH3}$ (second adsorption amount) with higher accuracy than the adsorption amount of $NH_3$, $NH_3Ad$ (first adsorption amount) and to estimate the state quantity that is difficult to actually measure (i.e., the gain value $K_{inj}$ indicating the variation in the supply portion).

<Second Embodiment>

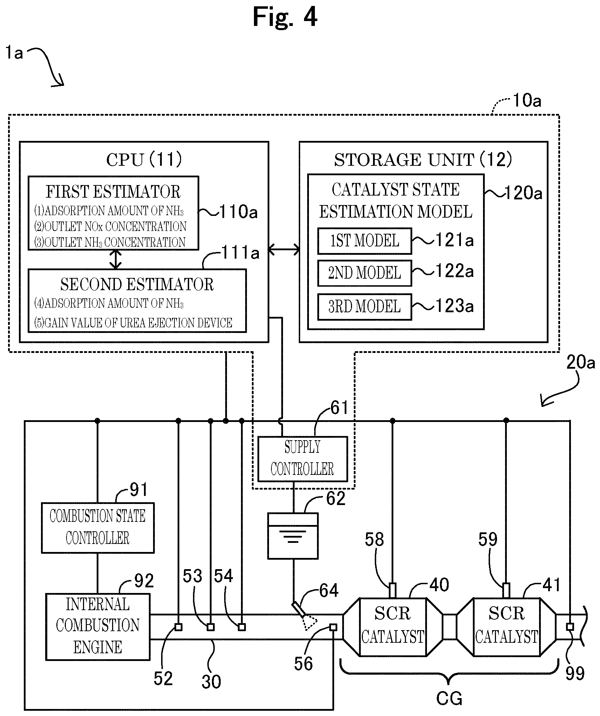

Fig. 4 is a block diagram illustrating an after-treatment system 1a according to a second embodiment. The first embodiment shown in Fig. 1 is configured to estimate the first adsorption amount and the second adsorption amount with regard to one SCR catalyst 40 and control the supply controller 61. The after-treatment system 1a of the second embodiment is, on the other hand, provided with a plurality of SCR catalysts and is configured to estimate a total first adsorption amount and a total second adsorption amount with regard to the plurality of SCR catalysts and control the supply controller 61. The after-treatment system 1a includes a control device 10a and an exhaust emission control device 20a, in place of the controller 10 and the exhaust emission control device 20, respectively.

The exhaust emission control device 20a additionally includes a second SCR catalyst 41 placed downstream of the SCR catalyst 40. In the description below, with a view to distinguishing, the SCR catalyst 40 is also called the first SCR catalyst 40. The second SCR catalyst 41 is a similar type of a selective catalytic reduction catalyst to the first SCR catalyst 40. In this embodiment, the "similar type of catalyst" means a catalyst that has an identical or similar exhaust emission control mechanism. The second SCR catalyst 41 uses $NH_3$ (additive) that is not fully consumed by but is discharged from the first SCR catalyst 40, to convert NOx (harmful substance) that is not fully converted by but is discharged from the first SCR catalyst 40. The exhaust emission control device 20a may be provided with a urea nozzle configured to individually supply the aqueous urea solution from the urea pump unit 62 to the second SCR catalyst 41. In the description below, the plurality of similar type of catalysts provided in the exhaust emission control device 20a (the first and the second SCR catalysts 40 and 41) are collectively called the "catalyst group CG". The first SCR catalyst 40 is also called the "most upstream-side catalyst", and the second SCR catalyst 41 is also called the "most downstream-side catalyst".

The control device 10a additionally includes a second temperature acquirer 59 that is configured by a sensor of measuring the bed temperature of the second SCR catalyst 41. Furthermore, the control device 10a includes a first estimator 110a and a second estimator 111a respectively in place of the first estimator 110 and the second estimator 111, and also includes a catalyst state estimation model 120a in place of the catalyst state estimation model 120. The control device 10a may include a temperature estimator configured to estimate the temperature of the downstream-side catalyst (the second SCR catalyst 41 in the illustrated example of Fig. 4), in place of the second temperature acquirer 59. The temperature estimator is configured to calculate the temperature of the second SCR catalyst 41 from the temperature of the first SCR catalyst 40 that is obtained by the first temperature acquirer 58, by using a relational expression, a map or the like provided in advance. According to a modification, the temperature estimator may be configured to calculate the temperature of the second SCR catalyst 41 by taking into account the temperature of the exhaust emission from the internal combustion engine 92, the flow rate of the exhaust emission, the heat of reaction of the first SCR catalyst 40, and any other parameters.

In the catalyst state estimation model 120a, a first model 121a is configured to output a total NOx conversion rate of the entire catalyst group CG. Similarly, a second model 122a is configured to output a total flow rate of $NH_3$ with regard to the entire catalyst group CG. A third model 123a is configured to output a total amount of $NH_3$ that does not contribute to the conversion reaction of NOx with regard to the entire catalyst group CG. The catalyst state estimation model 120a is configured to output a total adsorption amount of $NH_3$ with regard to the entire catalyst group CG. The first estimator 110a uses this catalyst state estimation model 120a to estimate the total adsorption amount of $NH_3$ with regard to the entire catalyst group CG, as the first adsorption amount.

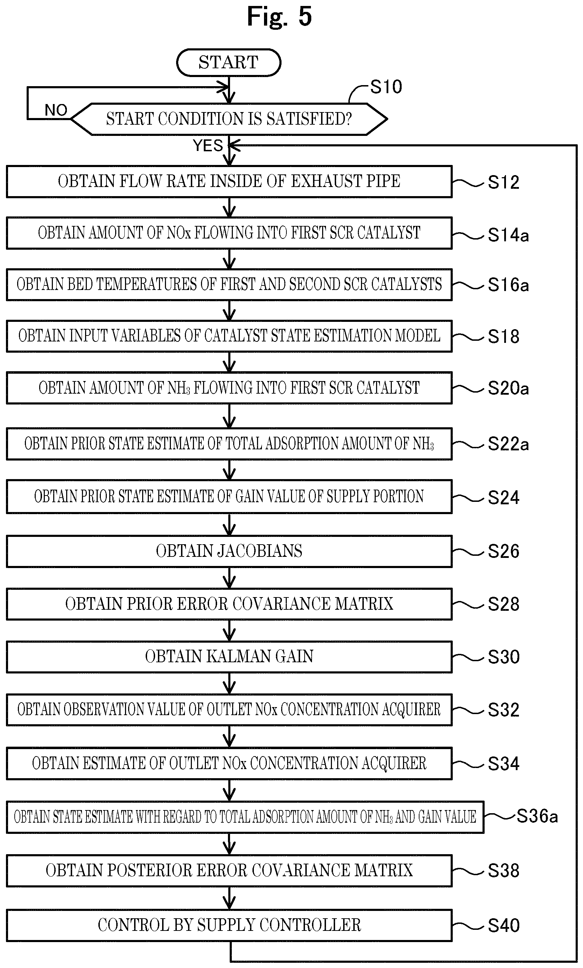

Fig. 5 is a flowchart showing a procedure of processing by the control device 10a according to the second embodiment. The following describes only a different part of the processing that differs from the processing described above with regard to the first embodiment (shown in Fig. 3). At step S14a, the second estimator 111a obtains the amount of NOx flowing into the most upstream-side catalyst (the first SCR catalyst 40) in the catalyst group CG. The details of this process are similar to those of the process of step S14 shown in Fig. 3. At step S16a, the second estimator 111a obtains the bed temperature of the first SCR catalyst 40 from the first temperature acquirer 58 and obtains the bed temperature of the second SCR catalyst 41 from the second temperature acquirer 59. At step S20a, the second estimator 111a obtains the amount of $NH_3$ flowing into the most upstream-side catalyst (the first SCR catalyst 40) in the catalyst group CG. The details of this process are similar to those of the process of step S20 shown in Fig. 3.

At step S22a, the second estimator 111a obtains a prior state estimate of the total adsorption amount of $NH_3$. At step S36a, the second estimator 111a obtains a prior state estimate with regard to the total adsorption amount of $NH_3$ and the gain value. The process of Fig. 5 replaces the "adsorption amount of $NH_3$" in Fig. 3 with the "total adsorption amount of $NH_3$" and otherwise performs the similar series of processing to that of the first embodiment described above with reference to Fig. 3. Accordingly, in the control device 10a of the second embodiment, both the first adsorption amount (the adsorption amount of $NH_3$, $NH_3Ad$) estimated by the first estimator 110a by using the catalyst state estimation model 120a and the second adsorption amount (the adsorption amount of $NH_3$, $m_{ad,NH3}$) estimated by the second estimator 111a according to the processing of Fig. 5 are the total adsorption amount of $NH_3$ with regard to the entire catalyst group CG.

As described above, in the control device 10a of the second embodiment, in the case where the exhaust pipe 30 (the main flow path) is provided with the plurality of similar type of catalysts, i.e., the first and the second SCR catalysts 40 and 41, the first estimator 110a and the second estimator 111a regard the plurality of catalysts 40 and 41 collectively as one catalyst (catalyst group CG) and estimate the first adsorption amount (the adsorption amount of $NH_3$, $NH_3Ad$) and the second adsorption amount (the adsorption amount of $NH_3$, $m_{ad,NH3}$). The configuration of incorporating the effects of the exhaust pipe 30 between the first SCR catalyst 40 and the second SCR catalyst 41 and the like into the mathematical model or the state estimation theory in advance enables the first estimator 110a and the second estimator 111a to estimate the first adsorption amount and the second adsorption amount with high accuracy, without obtaining information with regard to the exhaust pipe 30 and the like. In other words, this configuration decreases the total number of sensors and the like, compared with a configuration of individually estimating the adsorption amounts with regard to the respective catalysts 40 and 41. This accordingly decreases the total number of components of the after-treatment system 1a, while reducing the operation load of the first estimator 110a and the second estimator 111a and increasing the processing speed. Furthermore, in the case where the plurality of catalysts 40 and 41 provided in the exhaust pipe 30 are the similar type of catalysts, the first estimator 110a and the second estimator 111a regard these catalysts 40 and 41 collectively as one catalyst (catalyst group CG) and estimate the first adsorption amount and the second adsorption amount. The similar type of catalysts have no substantial differences in information items of the catalyst (for example, the temperature of the catalyst and the amount of $NH_3$ as the additive adsorbed to the catalyst) that affect the first adsorption amount and the second adsorption amount. This enables the first estimator 110a and the second estimator 111a to estimate the first adsorption amount and the second adsorption amount with high accuracy.

<Third Embodiment>

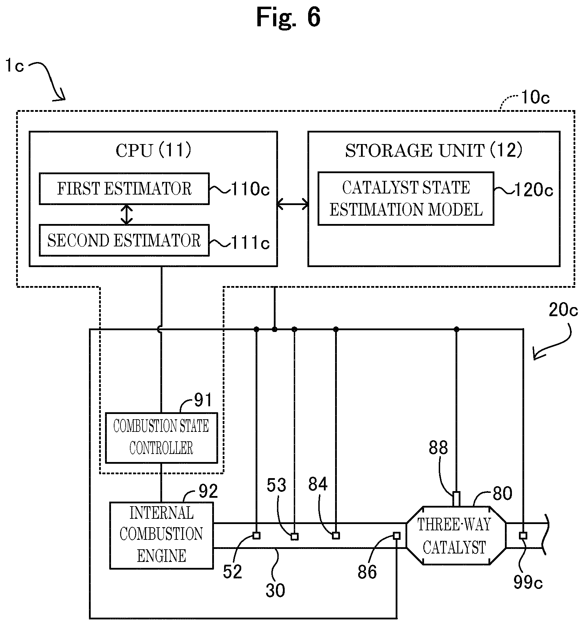

Fig. 6 is a block diagram illustrating an after-treatment system 1c according to a third embodiment. The first embodiment shown in Fig. 1 describes the configuration using the SCR catalyst. The after-treatment system 1c of the third embodiment, on the other hand, uses a three-way catalyst, in place of the SCR catalyst. The three-way catalyst uses $O_2$ (oxygen) produced by a redox reaction, as the additive to convert CO, HC, and NOx (harmful substances) in the exhaust emission. The after-treatment system 1c includes a control device 10c and an exhaust emission control device 20c, in place of the control device 10 and the exhaust emission control device 20, respectively.

The exhaust emission control device 20c includes a three-way catalyst 80 in place of the SCR catalyst 40 and is provided with neither the urea pump unit 62 nor the urea nozzle 64. The three-way catalyst 80 removes CO, HC and NOx contained in the exhaust emission by oxidation or reduction thereof and thereby converts these harmful substances. The three-way catalyst 80 has an oxygen storage capacity OSC and is capable of accumulating (storing) oxygen ($O_2$) in the

exhaust emission flowing into the three-way catalyst 80. In this embodiment, the "additive" is $O_2$ used for the oxidation reaction. The three-way catalyst 80 corresponds to the "catalyst" according to this embodiment.

The control device 10c does not include the supply controller 61. The control device 10c includes an oxygen concentration acquirer 84 in place of the NOx concentration acquirer 54, a front-end temperature acquirer 86 in place of the front-end temperature acquirer 56, an outlet harmful substance concentration acquirer 99c in place of the outlet NOx concentration acquirer 99, a first estimator 110c in place of the first estimator 110, a second estimator 111c in place of the second estimator 111, and a catalyst state estimation model 120c in place of the catalyst state estimation model 120.

The oxygen concentration acquirer 84 is configured to obtain an $O_2$ concentration in the exhaust emission from the internal combustion engine 92. The oxygen concentration acquirer 84 may be configured by obtaining a measurement signal measured by an A/F sensor provided in the exhaust pipe 30 or may be configured by obtaining a measurement signal measured by an oxygen sensor. The oxygen concentration acquirer 84 may estimate the $O_2$ concentration in the exhaust emission from an intake air flow signal or a fuel injection amount signal into the internal combustion engine 92. The oxygen concentration acquirer 84 is also called the "third acquirer" that obtains information of the additive. The front-end temperature acquirer 86 is a sensor configured to measure the temperature in the vicinity of an inlet (at a front end) of the three-way catalyst 80. The temperature acquirer 88 is a sensor configured to measure the bed temperature of the three-way catalyst 80. The outlet harmful substance concentration acquirer 99c is configured to obtain the concentration of at least one or more elements (may be one or may be multiple) among the harmful substances CO, HC and NOx contained in the exhaust emission.

The front-end temperature acquirer 86 and the temperature acquirer 88 are also called the "first acquirer" that obtains information of the three-way catalyst 80. According to the embodiment, the combustion state controller 91 corresponds to the "supply controller", the internal combustion engine 92 corresponds to the "supply portion", and the outlet harmful substance concentration acquirer 99c corresponds to the "outlet concentration acquirer".

Like the catalyst state estimation model 120 of the first embodiment, the catalyst state estimation model 120c includes a first model configured by a machine learning model to output a conversion rate of at least one of CO, HC and NOx in the three-way catalyst 80, a second model configured by a machine learning model to output an outflow amount of $O_2$ from the three-way catalyst 80, and a third model configured by a physical model to output an amount of $O_2$ that does not contribute to the conversion reaction of CO, HC or NOx. The first estimator 110c uses this catalyst state estimation model 120c to determine the adsorption amount of the additive $O_2$ (first adsorption amount) in the three-way catalyst 80 according to the laws of physics, for example, the mass conservation law, the mass balance law, the heat balance law and the energy balance law.

The second estimator 111c performs a similar series of processing to that of the first embodiment shown in Fig. 3 by using the adsorption amount of the additive $O_2$ in the three-way catalyst 80 and the gain value indicating the variation in the internal combustion engine 92, as the vector x of Mathematical Expression 2, and estimates the adsorption amount of the additive $O_2$ (second adsorption amount) and the gain value, in consideration of the observation value of the outlet harmful substance concentration acquirer 99c. The combustion state controller 91 uses the estimated second adsorption amount and the estimated gain value and controls the air-fuel ratio in the internal combustion engine 92 to one of the lean state, the stoichiometric state, and the rich state. The configuration of the third embodiment using the three-way catalyst 80 has similar advantageous effects to those of the first embodiment described above.

<Fourth Embodiment>

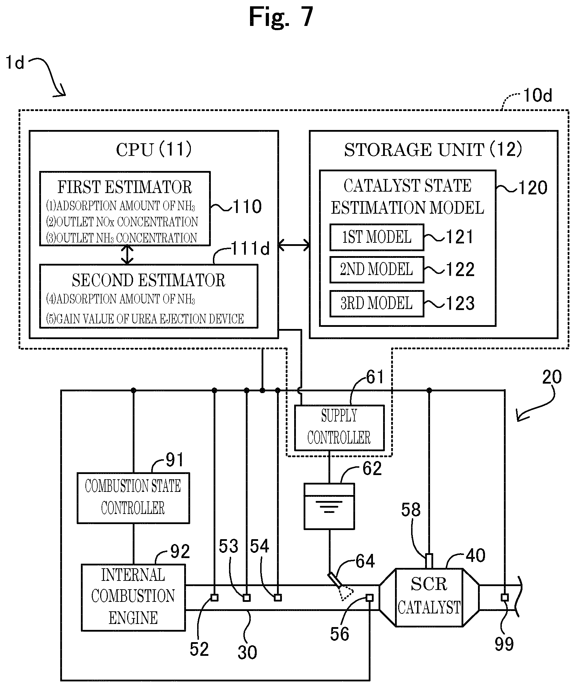

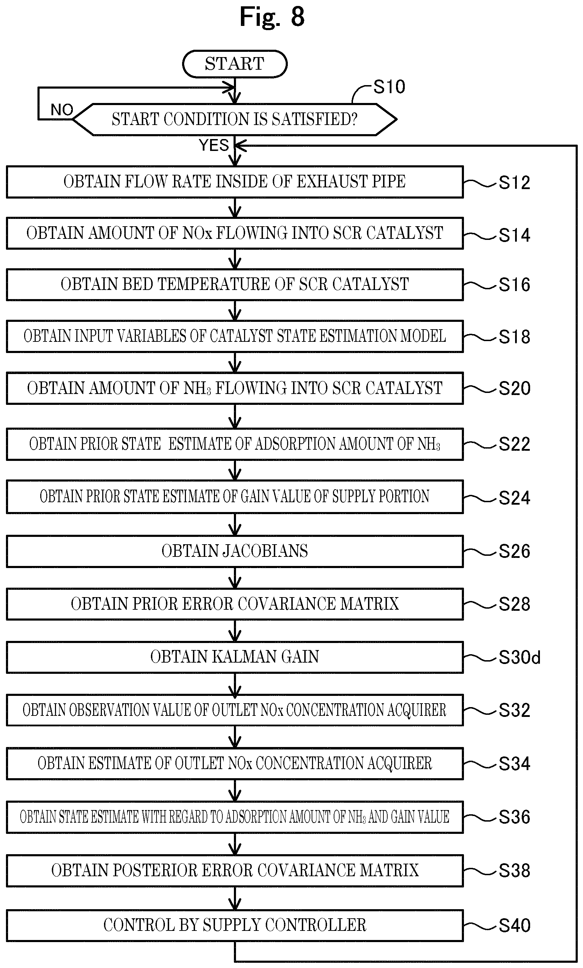

Fig. 7 is a block diagram illustrating an after-treatment system 1 according to a fourth embodiment. The after-treatment system 1d of the fourth embodiment is configured to enhance the robustness of an estimated value of a state quantity against an error of a sensor configured to measure the outlet NOx concentration. The "sensor configured to measure the outlet NOx concentration" herein denotes the outlet NOx concentration acquirer 99 (outlet concentration acquirer). The "state quantity" herein means the adsorption amount of $NH_3$ by the SCR catalyst 40 (second adsorption amount) and the gain value indicating a variation in the supply portion. The after-treatment system 1d of the fourth embodiment includes a control device 10d, in place of the control device 10. The control device 10d includes a second estimator 111d in place of the second estimator 111. The control device 10d performs a processing flow shown in Fig. 8, in place of the processing flow described above with reference to Fig. 3.

Fig. 8 is a flowchart showing a procedure of processing performed by the control device 10d according to the fourth embodiment. The processing flow shown in Fig. 8 is similar to the processing flow of the first embodiment described above with reference to Fig. 3, except replacement of step S30 with step S30d.

At step S30d, the second estimator 111d of the control device 10d obtains a Kalman gain G[k] according to Mathematical Expression 8 described in the first embodiment and Mathematical Expression 12 given below. More specifically, the second estimator 111d first determines a variance R= $\sigma^2$ of observation noise in the outlet NOx concentration acquirer 99 according to Mathematical Expression 12. In Mathematical Expression 12, $y_k$ denotes the observation value y[k] of the outlet NOx concentration acquirer 99 at a current time (time t= k$\Delta$t), and $\theta$ denotes a

predetermined value [%] indicating an error of the outlet NOx concentration acquirer 99 (hereinafter referred to as "observation error θ"). The observation error θ is a predetermined value. The observation error θ may be a sensor specification value of the outlet NOx concentration acquirer 99 or may be set by a user of the after-treatment system 1d. The observation error θ may be a corrected sensor specification value of the outlet NOx concentration acquirer 99, which is corrected by an index indicating a degree of deterioration of the outlet NOx concentration acquirer 99 (for example, the age of service of the outlet NOx concentration acquirer 99). The second estimator 111d subsequently obtains the Kalman gain G[k] by substituting the determined variance R of the observation noise into Mathematical Expression.
[Math. 12]

$$3\sigma = \frac{\theta}{100}y_k \quad \therefore R_k = \sigma^2 = \left(\frac{\theta}{300}y_k\right)^2 \qquad \cdot\ \cdot\ \cdot\ (12)$$

Even when the observation error θ of the outlet NOx concentration acquirer 99 is fixed, the magnitude (spread) of the variance σ differs, depending on the observation value y[k] of the outlet NOx concentration acquirer 99. The procedure of this embodiment determines the variance R= $\sigma^2$ of the observation noise according to Mathematical Expression 12 on the assumption that the observation error θ of the outlet NOx concentration acquirer 99 is equal to 3σ. According to a modification, Mathematical Expression 12 may be modified on the assumption that the observation error θ is equal to nσ (where n denotes any positive real number). In this case, "3" should be replaced by "n" in Mathematical Expression 12.

As described above, in the control device 10d of the fourth embodiment, the second estimator 111d determines the variance R of the observation noise in the outlet NOx concentration acquirer 99 (outlet concentration acquirer) from the concentration $y_k$ of the harmful substance obtained by the outlet NOx concentration acquirer 99 (the outlet NOx concentration, the outlet harmful substance concentration) and the observation error θ (the predetermined value indicating the error) of the outlet NOx concentration acquirer 99. While the conventional configuration generally uses a fixed value as the variance R of the observation error, the control device 10d causes the variance R of the observation noise in the outlet NOx concentration acquirer 99 to be varied depending on the obtained value $y_k$ (the observed value $y_k$) by the outlet NOx concentration acquirer. The second estimator 111d uses the variance R of the observation noise in the outlet NOx concentration acquirer 99 determined as described above for Mathematical Expression 8 in the state estimation theory to estimate the adsorption amount of $NH_3$, $m_{ad,\ NH3}$ (second adsorption amount) and the gain value $K_{inj}$. This enhances the robustness of the estimated values of the state quantities (the adsorption amount of $NH_3$, $m_{ad}$, $NH_3$ and the gain value $K_{inj}$). The supply controller 61 then uses the adsorption amount of $NH_3$, $m_{ad,\ NH3}$ and the gain value $K_{inj}$ estimated by the second estimator 111d to control the supply of the additive in the urea pump unit 62 and the urea nozzle 64 (supply portion). This configuration further enhances the conversion rate of NOx (harmful substance) by the SCR catalyst 40.

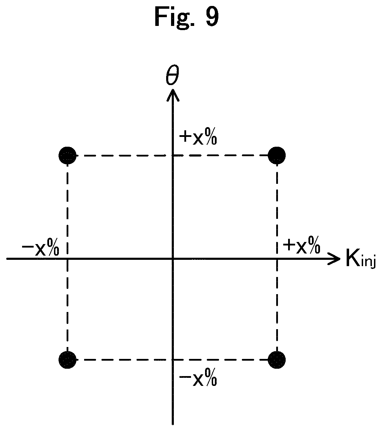

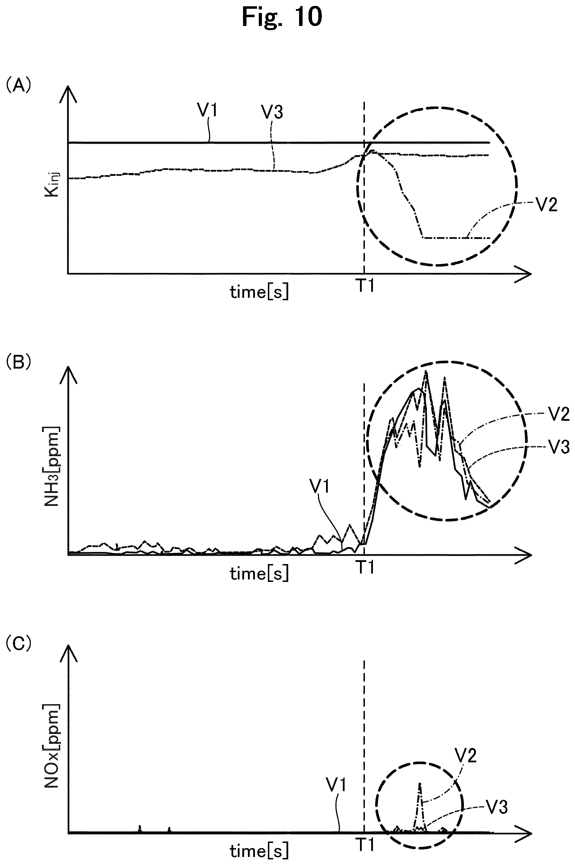

Fig. 9 is a diagram illustrating variations of the supply portion and the outlet NOx concentration acquirer 99. Fig. 10 is a diagram illustrating one example of the results of simulation using the after-treatment system 1d. An example of the advantageous effects of the after-treatment system 1d is described with reference to Fig. 9 and Fig. 10. The after-treatment system 1d has a variation in the supply portion (the urea pump unit 62 and the urea nozzle 64) and a variation in the outlet NOx concentration acquirer 99. The variation in the supply portion is expressed by the gain value $K_{inj}$ described in the item e2, and the variation in the outlet NOx concentration acquirer 99 is expressed by the observation error θ as described above. Combinations of the gain value $K_{inj}$ and the observation error θ taking into account the variations are in a range surrounded by a rectangular broken line in Fig. 9. In Fig. 9, x denotes an arbitrary integral value.

A test environment of the after-treatment system 1d was created by combining the control device 10d described above and the exhaust emission control device 20 virtually constructed by using an information processing device. Fig. 10 illustrates the results of simulation obtained by using this test environment. Fig. 10(A) shows a time-course change of the gain value $K_{inj}$ calculated by the processing shown in Fig. 8. Fig. 10(B) shows a time-course change of the outlet $NH_3$ concentration $NH\char94_{3,DS}$ calculated by the processing shown in Fig. 8. Fig. 10(C) shows a time-course change of the outlet NOx concentration $NO\char94_{x,DS}$ (the estimated value of the outlet NOx concentration) calculated by the processing shown in Fig. 8. In Fig. 10(A) to Fig. 10(C), each solid-line polygonal curve V1 shows a change of each correct answer value predicted in simulation. Each one-dot chain-line polygonal curve V2 shows a change of each value when the variance R of the observation noise in the outlet NOx concentration acquirer 99 is set to a "fixed value" (in other words, when the processing using Mathematical Expression 12 described above is not performed). Each broken-line polygonal curve V3 shows a change of each value when the variance R of the observation noise in the outlet NOx concentration acquirer 99 is subjected to the processing using Mathematical Expression 12 described above.

In the illustrated example of Fig. 10, providing an error of +40% to each of the observation error θ and the gain value $K_{inj}$ was started at a time T1. As clearly shown in Fig. 10(A) to Fig. 10(C), after the time T1 when providing the error was started, the polygonal curves V2 (one-dot chain line) with setting the variance R of the observation noise to the fixed value are deviated from the curves of correct answer value V1 (solid line), especially in parts encircled by broken line circles. Even after the time T1, on the other hand, the polygonal curves V3 (broken line) with the variance R of the observation noise varied depending on the observed value $y_k$ of the outlet NOx concentration acquirer 99 follow the curves of correct answer value V1 and are not significantly deviated from the curves of correct answer value V1. These results of simulation show that the control device 10d of the fourth embodiment enhances the robustness of the estimated values of the state quantities against the observation error $\theta$ of the outlet NOx concentration acquirer 99.

The fourth embodiment is described as a modification of the first embodiment. The configuration of the fourth embodiment is, however, also applicable to the second embodiment using the plurality of SCR catalysts and to the third embodiment using the three-way catalyst. The configuration of the fourth embodiment is further applicable to other configurations described below as modifications.

<Modifications of Embodiments>

The present disclosure is not limited to the embodiments described above but may be implemented by a variety of other aspects without departing from the scope of the disclosure. For example, part of the configuration implemented by hardware may be replaced by software. On the contrary, part of the configuration implemented by software may be replaced by hardware. Some examples of possible modification are given below.

[Modification 1]

The above embodiments describe exemplified configurations of the after-treatment system. The configuration of the after-treatment system may, however, be modified in various ways. For example, the exhaust emission control device of the after-treatment system may be provided with a plurality of different catalysts in combination selected among the SCR catalyst, the NSR catalyst and the three-way catalyst. The control device may be configured to estimate an adsorption amount of an additive and a gain value indicating a variation in a supply portion that supplies the additive, with respect to each of the plurality of catalysts by using the state estimation theory. The control device may also be configured to control a supply amount of each additive in each supply portion by using the estimated adsorption amount of each additive and the estimated gain value. Furthermore, the exhaust emission control device may be provided with another configuration, such as a diesel particulate filter (DPF) configured to remove particulate matter (PM) or a hydrolysis catalyst.

For example, the temperature acquirer configured to obtain the bed temperature of the catalyst may be placed upstream of the catalyst (in the vicinity of the inlet of the catalyst) or downstream of the catalyst (in the vicinity of the outlet of the catalyst). For example, at least any of the flow rate, the NOx concentration, the front-end temperature and the catalyst temperature respectively obtained by the flow rate acquirer, the NOx concentration acquirer, the front-end temperature acquirer, and the temperature acquirer may be an estimate obtained by using an NN, a map or the like, instead of the measurement value by the sensor.

[Modification 2]

Exemplified series of processing performed by the control device (shown in Figs. 3 ,5 and 8) are described in the above embodiments. The series of processing performed by the control device may, however, be modified in various ways. For example, in the processing of Fig. 3 or Fig. 5 or Fig. 8, the execution sequence of steps S10 to S40 may be changed, or at least part of the processing of steps S10 to S40 may be omitted. For example, the first estimator may use any means, such as an NN, a map, a physical equation or the like, that is different from the catalyst state estimation model described above, to estimate the first adsorption amount. Similarly, the first estimator may use any means, such as an NN, a map, a physical equation or the like, that is different from the first model, to estimate the NOx conversion rate. The first estimator may use any means, such as an NN, a map, a physical equation or the like, that is different from the second model, to estimate the outflow amount of $NH_3$. The first estimator may use any means, such as an NN, a map, a physical equation or the like, that is different from the third model, to estimate the amount of $NH_3$ that does not contribute to the conversion reaction of NOx.

**Claims**

1. A control device (10,10a,10c,10d) of an after-treatment system (1,1a,1c,1d), the after-treatment system (1,1a,1c,1d) comprising: an SCR catalyst (40,41,80) provided in a main flow path, which exhaust emission flows through, and configured to convert NOx in the exhaust emission; and a supply portion (62,64,92) configured to supply an additive for converting the NOx to the SCR catalyst (40,41,80),
the control device (10,10a,10c,10d) comprising:

an outlet concentration acquirer (99,99c) configured to obtain a concentration of the NOx at an outlet of the main flow path;

a first estimator (110,110a,110c) configured to estimate a first adsorption amount that is an adsorption amount of the additive adsorbed to the SCR catalyst (40,41,80), by using a predetermined mathematical model that represents a relationship of an estimated value of an adsorption amount of the additive obtained as a result of a previous estimation process, an amount of the additive flowing into the SCR catalyst, an amount of the additive flowing out from the SCR catalyst, a conversion rate of the NOx in the SCR catalyst, an amount of the NOx flowing into the SCR catalyst, and an amount of the additive that does not contribute to a conversion reaction of the NOx, in the SCR catalyst;

a second estimator (111,111a,111c,111d) configured to estimate a second adsorption amount that is an adsorption amount of the additive in the SCR catalyst (40,41,80) in consideration of the concentration of the NOx obtained by the outlet concentration acquirer (99,99c), and a gain value that indicates a variation in the supply portion (62,64,92) in consideration of the concentration of the NOx obtained by the outlet concentration acquirer (99,99c), from the first adsorption amount and a gain value indicating a variation in the supply portion (62,64,92), by using a state estimation theory; and

a supply controller (61,91) configured to control supply of the additive in the supply portion (62,64,92) by using the second adsorption amount and the gain value estimated by the second estimator (111,111a,111c,111d),

wherein the second estimator obtains a vector x^[k] including a state estimate of the second adsorption amount and a state estimate of the gain value by using an expression of:

$$\widehat{x}(k) = \widehat{x}^-(k) + G(k)\{y(k) - h(\widehat{x}^-(k))\} \qquad \cdot \cdot \cdot (10)$$

where x^-[k] denotes a vector including a prior state estimate of the first adsorption amount at a present time obtained by the mathematical model and a prior state estimate of the gain value at the present time obtained by a dynamic characteristic model of the gain value;

G[k] denotes a Kalman gain of a prior error covariance matrix, which is obtained from Jacobians with regard to the mathematical model and the dynamic characteristic model, and the Jacobians;

y[k] denotes an observation value of the outlet concentration acquirer at the present time; and

h[x^-[k]] denotes an estimate of the outlet concentration acquirer at the present time, and

wherein the second estimator sends the obtained state estimate of the second adsorption amount and the obtained state estimate of the gain value to the supply controller.

2. The control device (10, 10a, 10c, 10d) of the after-treatment system (1,1a,1c,1d) according to claim 1, wherein the first estimator (110, 110a, 110c) is further configured to:

   respectively estimate a conversion rate of the NOx in the SCR catalyst (40,41,80) and an outflow amount of the additive flowing out from the SCR catalyst (40,41,80), by using the mathematical model;
   estimate an outlet NOx concentration that is a concentration of the NOx at the outlet of the main flow path by using the estimated conversion rate of the NOx; and
   estimate an outlet additive concentration that is a concentration of the additive at the outlet of the main flow path by using the estimated outflow amount.

3. The control device (10, 10a, 10c, 10d) of the after-treatment system (1,1a,1c,1d) according to claim 2, wherein the second estimator (111, 111a, 111c, 111d) is further configured to:

   determine an estimate of the concentration of the NOx that is expected to be obtained by the outlet concentration acquirer (99,99c), from the outlet NOx concentration and the outlet additive concentration; and
   correct the concentration of the NOx obtained by the outlet concentration acquirer (99,99c), with the determined estimate of the outlet concentration acquirer (99,99c), in the state estimation theory.

4. The control device (10, 10a, 10c, 10d) of the after-treatment system (1,1a,1c,1d) according to any one of claims 1 to 3, wherein the second estimator (111, 111a, 111c, 111d) employs an algorithm of determining an estimate that minimizes a mean squared error of a state quantity when the mean squared error is used as an evaluation function, for the state estimation theory.

5. The control device (10d) of the after-treatment system (1d) according to any one of claims 1 to 4, wherein the second estimator (111d) is further configured to:

determine a variance of observation noise in the outlet concentration acquirer (99) from the concentration of the NOx obtained by the outlet concentration acquirer (99) and a predetermined value indicating an error of the outlet concentration acquirer (99); and

estimate the second adsorption amount and the gain value by using the determined variance of the observation noise in the state estimation theory.

6. The control device (10a) of the after-treatment system (1a) according to any one of claims 1 to 5,

wherein when a plurality of similar type of the SCR catalysts (40,41) are provided in the main flow path,

the first estimator (110a) estimates a total adsorption amount of the additive with regard to the plurality of SCR catalysts (40,41), as the first adsorption amount,

the second estimator (111a) estimates a total adsorption amount of the additive with regard to the plurality of SCR catalysts (40,41), as the second adsorption amount in consideration of the concentration of the NOx obtained by the outlet concentration acquirer (99), and

the supply controller (61) controls supply of the additive to the plurality of SCR catalysts (40,41) by using the second adsorption amount and the gain value estimated by the second estimator (111a).

7. An after-treatment system (1,1a,1c,1d), comprising:

the control device (10,10a,10c,10d) of the after-treatment system (1,1a,1c,1d) according to any one of claims 1 to 6;

an SCR catalyst (40,41,80) provided in a main flow path, which exhaust emission flows through, and configured to convert NOx in the exhaust emission; and

a supply portion (62,64,92) configured to supply an additive for converting the NOx to the SCR catalyst (40,41,80).

8. A method of controlling an after-treatment system (1,1a,1c,1d), wherein the after-treatment system (1,1a,1c,1d) comprises: an SCR catalyst (40,41,80) provided in a main flow path, which exhaust emission flows through, and configured to convert NOx in the exhaust emission; and a supply portion (62,64,92) configured to supply an additive for converting the NOx to the SCR catalyst (40,41,80),

the method comprising:

obtaining a concentration of the NOx at an outlet of the main flow path;

estimating a first adsorption amount that is an adsorption amount of the additive adsorbed to the SCR catalyst (40,41,80), by using a predetermined mathematical model that represents a relationship of an estimated value of an adsorption amount of the additive obtained as a result of a previous estimation process, an amount of the additive flowing into the SCR catalyst, an amount of the additive flowing out from the SCR catalyst, a conversion rate of the NOx in the SCR catalyst, an amount of the NOx flowing into the SCR catalyst, and an amount of the additive that does not contribute to a conversion reaction of the NOx, in the SCR catalyst;

estimating a second adsorption amount that is an adsorption amount of the additive in the SCR catalyst (40,41,80) in consideration of the obtained concentration of the NOx, and a gain value that indicates a variation in the supply portion (62,64,92) in consideration of the obtained concentration of the NOx, from the first adsorption amount and a gain value indicating a variation in the supply portion (62,64,92), by using a state estimation theory; and

controlling supply of the additive in the supply portion (62,64,92) by using the estimated second adsorption amount and the estimated gain value,

wherein the estimating the second adsorption amount and the gain value comprises obtaining a vector x^[k] including a state estimate of the second adsorption amount and a state estimate of the gain value by using an expression of:

$$\hat{x}(k) = \hat{x}^-(k) + G(k)\left\{y(k) - h\left(\hat{x}^-(k)\right)\right\} \qquad \cdot\cdot\cdot(10)$$

where x^-[k] denotes a vector including a prior state estimate of the first adsorption amount at a present time obtained by the mathematical model and a prior state estimate of the gain value at the present time obtained by a dynamic characteristic model of the gain value;

G[k] denotes a Kalman gain of a prior error covariance matrix, which is obtained from Jacobians with regard to the mathematical model and the dynamic characteristic model, and the Jacobians;

y[k] denotes an observation value of the concentration of the NOx at the outlet at the present time; and

h[x^-[k]] denotes an estimate of the concentration of the NOx at the outlet at the present time.

9. A computer program of controlling an after-treatment system (1,1a,1c,1d), the after-treatment system (1,1a,1c,1d) comprising: an SCR catalyst (40,41,80) provided in a main flow path, which exhaust emission flows through, and configured to convert NOx in the exhaust emission; and a supply portion (62,64,92) configured to supply an additive for converting the NOx to the SCR catalyst (40,41,80),

the computer program comprising computer-executable instructions which, when executed by an information processing device, cause the information processing device to perform the method of claim 8.

**Patentansprüche**

1. Steuervorrichtung (10, 10a, 10c, 10d) eines Nachbehandlungssystems (1, 1a, 1c, 1d), wobei das Nachbehandlungssystem (1, 1a, 1c, 1d) aufweist: einen SCR-Katalysator (40, 41, 80), der in einem Hauptströmungspfad, durch den eine Abgasemission strömt, vorgesehen ist und zum Umwandeln von NOx in der Abgasemission ausgebildet ist; und einen Zufuhrteil (62, 64, 92), der zum Zuführen eines Zusatzstoffs zum Umwandeln des NOx zu dem SCR-Katalysator (40, 41, 80) ausgebildet ist,

   bei der die Steuervorrichtung (10, 10a, 10c, 10d) aufweist:

   eine Auslasskonzentrationserfassungsvorrichtung (99, 99c), die zum Erhalten einer Konzentration des NOx an einem Auslass des Hauptströmungspfads ausgebildet ist;
   eine erste Schätzvorrichtung (110, 110a, 110c), die zum Schätzen einer ersten Adsorptionsmenge, die eine Adsorptionsmenge des Zusatzstoffs, der an dem SCR-Katalysator (40, 41, 80) adsorbiert ist, ist, unter Verwendung eines vorbestimmten mathematischen Modells, das eine Beziehung zwischen einem geschätzten Wert einer Adsorptionsmenge des Zusatzstoffs, der als ein Ergebnis eines vorherigen Schätzprozesses erhalten wird, einer Menge des Zusatzstoffs, die in den SCR-Katalysator strömt, einer Menge des Zusatzstoffs, die aus dem SCR-Katalysator strömt, einer Umwandlungsrate des NOx in dem SCR-Katalysator, einer Menge des NOx, die in den SCR-Katalysator strömt, und einer Menge des Zusatzstoffs, die nicht zu einer Umwandlungsreaktion des NOx beiträgt, in dem SCR-Katalysator darstellt, ausgebildet ist;
   eine zweite Schätzvorrichtung (111, 111a, 111c, 111d), die zum Schätzen einer zweiten Adsorptionsmenge, die eine Adsorptionsmenge des Zusatzstoffs in dem SCR-Katalysator (40, 401, 80) ist, unter Berücksichtigung der Konzentration des NOx, die durch die Auslasskonzentrationserfassungsvorrichtung (99, 99c) erhalten wird, und eines Verstärkungswerts, der eine Variation in dem Zufuhrteil (62, 64, 92) unter Berücksichtigung der Konzentration des NOx, die durch die Auslasskonzentrationserfassungsvorrichtung (99, 99c) erhalten wird, angibt, anhand der ersten Adsorptionsmenge und eines Verstärkungswerts, der eine Variation in dem Zufuhrteil (62, 64, 92) angibt, unter Verwendung einer Zustandsschätztheorie ausgebildet ist; und
   eine Zufuhrsteuerung (61, 91), die zum Steuern einer Zufuhr des Zusatzstoffs in den Zufuhrteil (62, 64, 92) unter Verwendung der zweiten Adsorptionsmenge und des Verstärkungswerts, die durch die zweite Schätzvorrichtung (111, 111a, 111c, 111d) geschätzt werden, ausgebildet ist,
   bei der die zweite Schätzvorrichtung einen Vektor x^[k], der eine Zustandsschätzung der zweiten Adsorptionsmenge und eine Zustandsschätzung des Verstärkungswerts aufweist, unter Verwendung eines folgenden Ausdrucks erhält:

   $$\widehat{x}(k) = \widehat{x}^-(k) + G(k)\big\{y(k) - h\big(\widehat{x}^-(k)\big)\big\} \qquad \cdot \cdot \cdot (10)$$

   wobei x^-[k] einen Vektor angibt, der eine vorherige Zustandsschätzung der ersten Adsorptionsmenge zu einer aktuellen Zeit, die durch das mathematische Modell erhalten wird, und eine vorherige Zustandsschätzung des Verstärkungswerts zu der aktuellen Zeit, die durch ein dynamisches charakteristisches Modell des Verstärkungswerts erhalten wird, aufweist;
   G[k] eine Kalman-Verstärkung einer vorherigen Fehlerkovarianzmatrix, die anhand von Jacobi-Ausdrücken in Bezug auf das mathematische Modell und das dynamische charakteristische Modell erhalten wird, und der Jacobi-Ausdrücke angibt;
   y[k] einen Beobachtungswert der Auslasskonzentrationserfassungsvorrichtung zu der aktuellen Zeit angibt; und
   h[x^-[k]] eine Schätzung der Auslasskonzentrationserfassungsvorrichtung zu der aktuellen Zeit angibt, und
   bei der die zweite Schätzvorrichtung die erhaltene Zustandsschätzung der zweiten Adsorptionsmenge und die erhaltene Zustandsschätzung des Verstärkungswerts zu der Zufuhrsteuerung sendet.

2. Steuervorrichtung (10, 10a, 10c, 10d) des Nachbehandlungssystems (1, 1a, 1c, 1d) nach Anspruch 1,
   bei der die erste Schätzvorrichtung (110, 110a, 110c) ferner ausgebildet ist zum:

jeweils Schätzen einer Umwandlungsrate des NOx in dem SCR-Katalysator (40, 41, 80) und einer Ausströmmenge des Zusatzstoffs, der aus dem SCR-Katalysator (40, 41, 80) ausströmt, unter Verwendung des mathematischen Modells;

Schätzen einer Auslass-NOx-Konzentration, die eine Konzentration des NOx an dem Auslass des Hauptströmungspfads ist, unter Verwendung der geschätzten Umwandlungsrate des NOx; und

Schätzen einer Auslasszusatzstoffkonzentration, die eine Konzentration des Zusatzstoffs an dem Auslass des Hauptströmungspfads ist, unter Verwendung der geschätzten Ausströmmenge.

3. Steuervorrichtung (10, 10a, 10c, 10d) des Nachbehandlungssystems (1, 1a, 1c, 1d) nach Anspruch 2,
bei der die zweite Schätzvorrichtung (111, 111a, 111c, 111d) ferner ausgebildet ist zum:

Bestimmen einer Schätzung der Konzentration des NOx, von der erwartet wird, dass sie durch die Auslasskonzentrationserfassungsvorrichtung (99, 99c) erhalten wird, anhand der Auslass-NOx-Konzentration und der Auslasszusatzstoffkonzentration; und

Korrigieren der Konzentration des NOx, die durch die Auslasskonzentrationserfassungsvorrichtung (99, 99c) erhalten wird, mit der bestimmten Schätzung der Auslasskonzentrationserfassungsvorrichtung (99, 99c) in der Zustandsschätztheorie.

4. Steuervorrichtung (10, 10a, 10c, 10d) des Nachbehandlungssystems (1, 1a, 1c, 1d) nach einem der Ansprüche 1 bis 3,
bei der die zweite Schätzvorrichtung (111, 111a, 111c, 111d) einen Algorithmus zum Bestimmen einer Schätzung einsetzt, der einen mittleren quadratischen Fehler einer Zustandsgröße minimiert, wenn der mittlere quadratische Fehler als eine Evaluierungsfunktion für die Zustandsschätztheorie verwendet wird.

5. Steuervorrichtung (10d) des Nachbehandlungssystems (1d) nach einem der Ansprüche 1 bis 4,
bei der die zweite Schätzvorrichtung (111d) ferner ausgebildet ist zum:

Bestimmen einer Varianz eines Beobachtungsrauschens in der Auslasskonzentrationserfassungsvorrichtung (99) anhand der Konzentration des NOx, die durch die Auslasskonzentrationserfassungsvorrichtung (99) erhalten wird, und eines vorbestimmten Werts, der einen Fehler der Auslasskonzentrationserfassungsvorrichtung (99) angibt; und

Schätzen der zweiten Adsorptionsmenge und des Verstärkungswerts unter Verwendung der bestimmten Varianz des Beobachtungsrauschens in der Zustandsschätztheorie.

6. Steuervorrichtung (10a) des Nachbehandlungssystems (1a) nach einem der Ansprüche 1 bis 5,

bei der, wenn mehrere ähnliche Typen der SCR-Katalysatoren (40, 41) in dem Hauptströmungspfad vorgesehen sind,

die erste Schätzvorrichtung (110a) die Gesamtadsorptionsmenge des Zusatzstoffs in Bezug auf die mehreren SCR-Katalysatoren (40, 41) als die erste Adsorptionsmenge schätzt,

die zweite Schätzvorrichtung (111a) eine Gesamtadsorptionsmenge des Zusatzstoffs in Bezug auf die mehreren SCR-Katalysatoren (40, 41) als die zweite Adsorptionsmenge unter Berücksichtigung der Konzentration des NOx, die durch die Auslasskonzentrationserfassungsvorrichtung (99) erhalten wird, schätzt und

die Zufuhrsteuerung (61) eine Zufuhr des Zusatzstoffs zu den mehreren SCR-Katalysatoren (40, 41) unter Verwendung der zweiten Adsorptionsmenge und des Verstärkungswerts, die durch die zweite Schätzvorrichtung (111a) geschätzt werden, steuert.

7. Nachbehandlungssystem (1, 1a, 1c, 1d) mit:

der Steuerungsvorrichtung (10, 10a, 10c, 10d) des Nachbehandlungssystems (1, 1a, 1c, 1d) nach einem der Ansprüche 1 bis 6;

einem SCR-Katalysator (40, 41, 80), der in dem Hauptströmungspfad, durch den eine Abgasemission strömt, vorgesehen ist und zum Umwandeln von NOx in der Abgasemission ausgebildet ist; und

einem Zufuhrteil (62, 64, 92), der zum Zuführen eines Zusatzstoffs zum Umwandeln des NOx zu dem SCR-Katalysator (40, 41, 80) ausgebildet ist.

8. Verfahren zum Steuern eines Nachbehandlungssystems (1, 1a, 1c, 1d), wobei das Nachbehandlungssystem (1, 1a, 1c, 1d) aufweist: einen SCR-Katalysator (40, 41, 80), der in einem Hauptströmungspfad, durch den eine Abgasemission strömt, vorgesehen ist und zum Umwandeln von NOx in der Abgasemission ausgebildet ist; und einen Zuführteil (62, 64, 92), der zum Zuführen eines Zusatzstoffs zum Umwandeln des NOx zu dem SCR-Katalysator (40, 41, 80) ausgebildet ist, mit folgenden Schritten:

Erhalten einer Konzentration des NOx an einem Auslass des Hauptströmungspfads;

Schätzen einer ersten Adsorptionsmenge, die eine Adsorptionsmenge des an dem SCR-Katalysator (40, 41, 80) adsorbierten Zusatzstoffs ist, unter Verwendung eines vorbestimmten mathematischen Modells, das eine Beziehung zwischen einem geschätzten Wert einer Adsorptionsmenge des Zusatzstoffs, der als ein Ergebnis eines vorherigen Schätzprozesses erhalten wird, einer Menge des Zusatzstoffs, die in den SCR-Katalysator strömt, einer Menge des Zusatzstoffs, die aus dem SCR-Katalysator strömt, einer Umwandlungsrate des NOx in dem SCR-Katalysator, einer Menge des NOx, die in den SCR-Katalysator strömt, und einer Menge des Zusatzstoffs, die nicht zu einer Umwandlungsreaktion des NOx beiträgt, in dem SCR-Katalysator darstellt;

Schätzen einer zweiten Adsorptionsmenge, die eine Adsorptionsmenge des Zusatzstoffs in dem SCR-Katalysator (40, 41, 80) ist, unter Berücksichtigung der erhaltenen Konzentration des NOx und eines Verstärkungswerts, der eine Variation in dem Zuführteil (62, 64, 92) unter Berücksichtigung der erhaltenen Konzentration des NOx angibt, anhand der ersten Adsorptionsmenge und eines Verstärkungswerts, der eine Variation in dem Zuführteil (62, 64, 92) angibt, unter Verwendung einer Zustandsschätztheorie; und

Steuern einer Zufuhr des Zusatzstoffs in den Zuführteil (62, 64, 92) unter Verwendung der geschätzten zweiten Adsorptionsmenge und des geschätzten Verstärkungswerts,

bei dem das Schätzen der zweiten Adsorptionsmenge und des Verstärkungswerts Erhalten eines Vektors x^[k], der eine Zustandsschätzung der zweiten Adsorptionsmenge und eine Zustandsschätzung des Verstärkungswerts aufweist, unter Verwendung eines folgenden Ausdrucks beinhaltet:

$$\hat{x}(k) = \hat{x}^-(k) + G(k)\{y(k) - h(\hat{x}^-(k))\} \qquad \cdot \cdot \cdot (10)$$

wobei x^[k] einen Vektor angibt, der eine vorherige Zustandsschätzung der ersten Adsorptionsmenge zu einer aktuellen Zeit, die durch das mathematische Modell erhalten wird, und eine vorherige Zustandsschätzung des Verstärkungswerts zu der aktuellen Zeit, die durch ein dynamisches charakteristisches Modell des Verstärkungswerts erhalten wird, aufweist;

G[k] eine Kalman-Verstärkung einer vorherigen Fehlerkovarianzmatrix, die anhand von Jacobi-Ausdrücken in Bezug auf das mathematische Modell und das dynamische charakteristische Modell erhalten wird, und der Jacobi-Ausdrücke angibt;

y[k] einen Beobachtungswert der Auslasskonzentrationserfassungsvorrichtung zu der aktuellen Zeit angibt; und

h[x^[k]] eine Schätzung der Auslasskonzentrationserfassungsvorrichtung zu der aktuellen Zeit angibt.

9. Computerprogramm zum Steuern eines Nachbehandlungssystems (1, 1a, 1c, 1d), wobei das Nachbehandlungssystem (1, 1a, 1c, 1d) aufweist: einen SCR-Katalysator (40, 41, 80), der in einem Hauptströmungspfad, durch den eine Abgasemission strömt, vorgesehen ist und zum Umwandeln von NOx in der Abgasemission ausgebildet ist; und einen Zuführteil (62, 64, 92), der zum Zuführen eines Zusatzstoffs zum Umwandeln des NOx zu dem SCR-Katalysator (40, 41, 80) ausgebildet ist,

bei dem das Computerprogramm von einem Computer ausführbare Anweisungen aufweist, die bei einer Ausführung durch eine Informationsverarbeitungsvorrichtung bewirken, dass die Informationsverarbeitungsvorrichtung das Verfahren nach Anspruch 8 durchführt.

## Revendications

1. Dispositif de commande (10,10a,10c,10d) d'un système de post-traitement (1,1a,1c,1d), le système de post-traitement (1,1a,1c,1d) comprenant : un catalyseur SCR (40,41,80) pourvu dans une voie d'écoulement principale, traversée par les gaz d'échappement, et configuré pour convertir les NOx dans les gaz d'échappement ; et une portion d'alimentation (62,64,92) configurée pour fournir un additif pour convertir les NOx au catalyseur SCR (40,41,80), le dispositif de commande (10,10a,10c,10d) comprenant :

un acquéreur de concentration de sortie (99,99c) configuré pour obtenir une concentration de NOx à une sortie de la voie d'écoulement principale ;

un premier estimateur (110,110a, 110c) configuré pour estimer une première quantité d'adsorption qui est une quantité d'adsorption de l'additif adsorbé sur le catalyseur SCR (40,41,80), en utilisant un modèle mathématique prédéterminé qui représente une relation d'une valeur estimée d'une quantité d'adsorption de l'additif obtenue à la suite d'un processus d'estimation précédent, une quantité d'additif s'écoulant dans le catalyseur SCR, une quantité de l'additif s'écoulant hors du catalyseur SCR, un taux de conversion des NOx dans le catalyseur SCR, une quantité de NOx s'écoulant dans le catalyseur SCR et une quantité d'additif qui ne contribue pas à une réaction de conversion des NOx dans le catalyseur SCR ;

un deuxième estimateur (111, 111a, 111c, 111d) configuré pour estimer une deuxième quantité d'adsorption qui est une quantité d'adsorption de l'additif dans le catalyseur SCR (40, 41, 80) en considération de la concentration de NOx obtenue par l'acquéreur de concentration de sortie (99, 99c), et une valeur de gain qui indique une variation dans la portion d'alimentation (62,64,92) en fonction de la concentration de NOx obtenue par l'acquéreur de concentration de sortie (99,99c), à partir de la première quantité d'adsorption et d'une valeur de gain indiquant une variation dans la portion d'alimentation (62,64,92), à l'aide d'une théorie d'estimation d'état ; et

un dispositif de commande d'alimentation (61,91) configuré pour commander l'alimentation de l'additif dans la portion d'alimentation (62,64,92) en utilisant la deuxième quantité d'adsorption et la valeur de gain estimée par le deuxième estimateur (111,111a,111c,111d),

dans lequel le deuxième estimateur obtient un vecteur x^ [k] comprenant une estimation de l'état de la deuxième quantité d'adsorption et une estimation d'état de la valeur de gain en utilisant une expression de :

$$\widehat{x}(k) = \widehat{x}^-(k) + \boldsymbol{G}(k)\{y(k) - h(\widehat{x}^-(k))\} \qquad \cdot \cdot \cdot (10)$$

où x^[k] désigne un vecteur comprenant une estimation de l'état antérieur de la première quantité d'adsorption à un moment donné, obtenue par le modèle mathématique, et une estimation de l'état antérieur de la valeur de gain à un moment donné, obtenue par un modèle caractéristique dynamique de la valeur de gain ;

G[k] désigne un gain de Kalman d'une matrice de covariance d'erreur antérieure, qui est obtenu à partir des jacobiens par rapport au modèle mathématique et au modèle caractéristique dynamique, et les jacobiens ;

y[k] désigne une valeur d'observation de l'acquéreur de concentration de sortie au moment donné ; et

h[x^-[k]] désigne une estimation de l'acquéreur de concentration de sortie au moment donné, et

dans lequel le deuxième estimateur envoie l'estimation de l'état obtenu de la deuxième quantité d'adsorption et l'estimation de l'état obtenu de la valeur de gain au dispositif de commande d'alimentation.

2.  Dispositif de commande (10,10a,10c,10d) du système de post-traitement (1,1a,1c,1d) selon la revendication 1, dans lequel le premier estimateur (110,110a, 110c) est en outre configuré pour :

    estimer respectivement un taux de conversion des NOx dans le catalyseur SCR (40,41,80) et une quantité de d'écoulement de sortie de l'additif s'écoulant hors du catalyseur SCR (40,41,80), en utilisant le modèle mathématique ;

    estimer une concentration de NOx de sortie qui est une concentration de NOx de sortie de la voie d'écoulement principale en utilisant le taux de conversion estimé des NOx ; et

    estimer une concentration d'additif de sortie qui est une concentration de l'additif à la sortie de la voie d'écoulement principale en utilisant la quantité d'écoulement de sortie estimée.

3.  Dispositif de commande (10,10a,10c,10d) du système de post-traitement (1,1a,1c,1d) selon la revendication 2, dans lequel le deuxième estimateur (111,111a, 111c,111d)est en outre configuré pour :

    déterminer une estimation de la concentration de NOx qui devrait être obtenue par l'acquéreur de concentration de sortie (99,99c), à partir de la concentration de NOx de sortie et de la concentration d'additif de sortie ; et

    corriger la concentration de NOx obtenue par l'acquéreur de concentration de sortie (99,99c), avec l'estimation déterminée de l'acquéreur de concentration de sortie (99,99c), dans la théorie d'estimation d'état.

4.  Dispositif de commande (10,10a,10c,10d) du système de post-traitement (1,1a,1c,1d) selon l'une quelconque des revendications 1 à 3,
    dans lequel le deuxième estimateur (111,111a, 111c, 111d) emploie un algorithme de détermination d'une estimation qui minimise une erreur quadratique moyenne d'une quantité d'état lorsque l'erreur quadratique moyenne est utilisée comme fonction d'évaluation, pour la théorie d'estimation d'état.

5.  Dispositif de commande (10d) du système de post-traitement (1d) selon l'une quelconque des revendications 1 à 4,

dans lequel le deuxième estimateur (111d) est en outre configuré pour :

déterminer une variance du bruit d'observation dans l'acquéreur de concentration de sortie (99) à partir de la concentration de NOx obtenue par l'acquéreur de concentration de sortie (99) et une valeur prédéterminée indiquant une erreur de l'acquéreur de concentration de sortie (99) ; et

estimer la deuxième quantité d'adsorption et la valeur de gain en utilisant la variance déterminée du bruit d'observation dans la théorie d'estimation d'état.

6. Dispositif de commande (10a) du système de post-traitement (1a) selon l'une quelconque des revendications 1 à 5,

dans lequel, lorsqu'une pluralité de catalyseurs SCR de type similaire (40,41) sont fournis dans la voie d'écoulement principale,

le premier estimateur (110a) estime une quantité d'adsorption totale de l'additif par rapport à la pluralité de catalyseurs SCR (40,41), comme étant la première quantité d'adsorption,

le deuxième estimateur (111a) estime une quantité d'adsorption totale de l'additif par rapport à la pluralité de catalyseurs SCR (40,41), en tant que deuxième quantité d'adsorption, en tenant compte de la concentration de NOx obtenue par l'acquéreur de concentration de sortie (99), et

le dispositif de commande d'alimentation (61) commande l'alimentation de l'additif à la pluralité de catalyseurs SCR (40,41) en utilisant la deuxième quantité d'adsorption et la valeur de gain estimée par le deuxième estimateur (111a).

7. Système de post-traitement (1,1a,1c,1d), comprenant :

le dispositif de commande (10,10a,10c,10d) du système de post-traitement (1,1a,1c,1d) selon l'une quelconque des revendications 1 à 6 ;

un catalyseur SCR (40,41,80) placé dans une voie d'écoulement principale, traversée par les gaz d'échappement, et configuré pour convertir les NOx dans les gaz d'échappement ; et

une portion d'alimentation (62,64,92) configurée pour fournir un additif pour convertir les NOx au catalyseur SCR (40,41,80).

8. Procédé de commande d'un système de post-traitement (1,1a,1c,1d), dans lequel le système de post-traitement (1,1a,1c,1d) comprend : un catalyseur SCR (40,41,80) fourni dans une voie d'écoulement principale, traversée par les gaz d'échappement, et configuré pour convertir les NOx dans les gaz d'échappement ; et une portion d'alimentation (62,64,92) configurée pour fournir un additif pour convertir les NOx au catalyseur SCR (40,41,80),

le procédé comprenant les étapes consistant à :

obtenir une concentration des NOx à une sortie de la voie d'écoulement principale ;

estimer une première quantité d'adsorption qui est une quantité d'adsorption de l'additif adsorbé au catalyseur SCR (40,41,80), en utilisant un modèle mathématique prédéterminé qui représente une relation d'une valeur estimée d'une quantité d'adsorption de l'additif obtenue à la suite d'un processus d'estimation précédent, une quantité d'additif s'écoulant dans le catalyseur SCR, une quantité d'additif sortant du catalyseur SCR, un taux de conversion des NOx dans le catalyseur SCR, une quantité de NOx s'écoulant dans le catalyseur SCR et une quantité de l'additif qui ne contribue pas à une réaction de conversion des NOx dans le catalyseur SCR ;

estimer une deuxième quantité d'adsorption qui est une quantité d'adsorption de l'additif dans le catalyseur SCR (40,41,80) en fonction de la concentration obtenue des NOx, et

une valeur de gain qui indique une variation dans la portion d'alimentation (62,64,92) en fonction de la concentration obtenue des NOx, à partir de la première quantité d'adsorption et d'une valeur de gain indiquant une variation dans la portion d'alimentation (62,64,92), à l'aide d'une théorie d'estimation d'état ; et

commander l'alimentation de l'additif dans la portion d'alimentation (62,64,92) en utilisant la deuxième quantité d'adsorption estimée et la valeur de gain estimée,

dans lequel l'estimation de la deuxième quantité d'adsorption et de la valeur de gain comprend l'obtention d'un vecteur x^[k] comprenant une estimation d'état de la deuxième quantité d'adsorption et une estimation d'état de la valeur de gain à l'aide d'une expression de :

$$\hat{x}(k) = \hat{x}^-(k) + G(k)\{y(k) - h(\hat{x}^-(k))\} \qquad \cdots (10)$$

où x^-[k] désigne un vecteur comprenant une estimation de l'état antérieur de la première quantité d'adsorption à un moment donné, obtenue par le modèle mathématique, et une estimation de l'état antérieur de la valeur de gain à un moment donné, obtenue par un modèle de caractéristiques dynamiques de la valeur de gain ;

G[k] désigne un gain de Kalman d'une matrice de covariance d'erreur antérieure, qui est obtenue à partir des jacobiens relatifs au modèle mathématique et au modèle caractéristique dynamique, et des jacobiens ;

y[k] désigne une valeur d'observation de la concentration des NOx de sortie au moment donné ; et

h[x^-[k]] désigne une estimation de la concentration des NOx de sortie au moment donné.

9. Programme informatique de commande d'un système de post-traitement (1,1a,1c,1d), le système de post-traitement (1,1a,1c,1d) comprenant : un catalyseur SCR (40,41,80) pourvu dans une voie d'écoulement principale, traversée par les gaz d'échappement, et configuré pour convertir les NOx dans les gaz d'échappement ; et une portion d'alimentation (62,64,92) configurée pour fournir un additif pour convertir les NOx au catalyseur SCR (40,41,80),

le programme informatique comprenant des instructions exécutables par ordinateur qui, lorsqu'elles sont exécutées par un dispositif de traitement d'information, amènent le dispositif de traitement de l'information à exécuter le procédé de la revendication 8.

# Fig. 1

# Fig. 2

123

INPUT
VARIABLES

$$\vec{U} = \begin{pmatrix} u_1 \\ u_2 \\ u_3 \\ \vdots \\ u_n \end{pmatrix}$$

$$v = -\frac{\mathrm{d}[NH_3]}{\mathrm{dt}} = A\exp\left(-\frac{E}{RT}\right)[NH_3]^n$$

OUTPUT
VARIABLE

Z

# Fig. 3

```
                    ( START )

              ┌──────────────────────────────┐  ┌─ S10
          NO  │  START CONDITION IS SATISFIED? │
         ←─────┤                              │
              └──────────────────────────────┘
                    YES
```

| | |
|---|---|
| OBTAIN FLOW RATE INSIDE OF EXHAUST PIPE | S12 |
| OBTAIN AMOUNT OF NOx FLOWING INTO SCR CATALYST | S14 |
| OBTAIN BED TEMPERATURE OF SCR CATALYST | S16 |
| OBTAIN INPUT VARIABLES OF CATALYST STATE ESTIMATION MODEL | S18 |
| OBTAIN AMOUNT OF $NH_3$ FLOWING INTO SCR CATALYST | S20 |
| OBTAIN PRIOR STATE ESTIMATE OF ADSORPTION AMOUNT OF $NH_3$ | S22 |
| OBTAIN PRIOR STATE ESTIMATE OF GAIN VALUE OF SUPPLY PORTION | S24 |
| OBTAIN JACOBIANS | S26 |
| OBTAIN PRIOR ERROR COVARIANCE MATRIX | S28 |
| OBTAIN KALMAN GAIN | S30 |
| OBTAIN OBSERVATION VALUE OF OUTLET NOx CONCENTRATION ACQUIRER | S32 |
| OBTAIN ESTIMATE OF OUTLET NOx CONCENTRATION ACQUIRER | S34 |
| OBTAIN STATE ESTIMATE WITH REGARD TO ADSORPTION AMOUNT OF $NH_3$ AND GAIN VALUE | S36 |
| OBTAIN POSTERIOR ERROR COVARIANCE MATRIX | S38 |
| CONTROL BY SUPPLY CONTROLLER | S40 |

# Fig. 4

1a

10a

## CPU (11)

### FIRST ESTIMATOR
(1)ADSORPTION AMOUNT OF NH₃
(2)OUTLET NOx CONCENTRATION
(3)OUTLET NH₃ CONCENTRATION

110a

### SECOND ESTIMATOR
(4)ADSORPTION AMOUNT OF NH₃
(5)GAIN VALUE OF UREA EJECTION DEVICE

111a

## STORAGE UNIT (12)

### CATALYST STATE ESTIMATION MODEL

120a

| 1ST MODEL | 121a |
| 2ND MODEL | 122a |
| 3RD MODEL | 123a |

20a

61

SUPPLY CONTROLLER

62

91

COMBUSTION STATE CONTROLLER

92

INTERNAL COMBUSTION ENGINE

53  54

52  30

64

56

58

59

40

41

SCR CATALYST

SCR CATALYST

99

CG

# Fig. 5

```
                    ┌─────────────┐
                    │    START    │
                    └──────┬──────┘
                           ↓                          ⌐S10
        ┌──────────────────────────────────────────┐
   NO   │      START CONDITION IS SATISFIED?        │
   ┌────┤                                            │
   │    └──────────────────┬─────────────────────────┘
   │              YES       ↓
   │    ┌──────────────────────────────────────────┐
   │    │  OBTAIN FLOW RATE INSIDE OF EXHAUST PIPE  │~S12
   │    └──────────────────┬───────────────────────┘
   │                       ↓
   │    ┌──────────────────────────────────────────┐
   │    │ OBTAIN AMOUNT OF NOx FLOWING INTO FIRST SCR CATALYST │~S14a
   │    └──────────────────┬───────────────────────┘
   │                       ↓
   │    ┌──────────────────────────────────────────┐
   │    │ OBTAIN BED TEMPERATURES OF FIRST AND SECOND SCR CATALYSTS │~S16a
   │    └──────────────────┬───────────────────────┘
   │                       ↓
   │    ┌──────────────────────────────────────────┐
   │    │ OBTAIN INPUT VARIABLES OF CATALYST STATE ESTIMATION MODEL │~S18
   │    └──────────────────┬───────────────────────┘
   │                       ↓
   │    ┌──────────────────────────────────────────┐
   │    │ OBTAIN AMOUNT OF NH3 FLOWING INTO FIRST SCR CATALYST │~S20a
   │    └──────────────────┬───────────────────────┘
   │                       ↓
   │    ┌──────────────────────────────────────────┐
   │    │ OBTAIN PRIOR STATE ESTIMATE OF TOTAL ADSORPTION AMOUNT OF NH3 │~S22a
   │    └──────────────────┬───────────────────────┘
   │                       ↓
   │    ┌──────────────────────────────────────────┐
   │    │ OBTAIN PRIOR STATE ESTIMATE OF GAIN VALUE OF SUPPLY PORTION │~S24
   │    └──────────────────┬───────────────────────┘
   │                       ↓
   │    ┌──────────────────────────────────────────┐
   │    │            OBTAIN JACOBIANS               │~S26
   │    └──────────────────┬───────────────────────┘
   │                       ↓
   │    ┌──────────────────────────────────────────┐
   │    │   OBTAIN PRIOR ERROR COVARIANCE MATRIX    │~S28
   │    └──────────────────┬───────────────────────┘
   │                       ↓
   │    ┌──────────────────────────────────────────┐
   │    │          OBTAIN KALMAN GAIN               │~S30
   │    └──────────────────┬───────────────────────┘
   │                       ↓
   │    ┌──────────────────────────────────────────┐
   │    │ OBTAIN OBSERVATION VALUE OF OUTLET NOx CONCENTRATION ACQUIRER │~S32
   │    └──────────────────┬───────────────────────┘
   │                       ↓
   │    ┌──────────────────────────────────────────┐
   │    │ OBTAIN ESTIMATE OF OUTLET NOx CONCENTRATION ACQUIRER │~S34
   │    └──────────────────┬───────────────────────┘
   │                       ↓
   │    ┌──────────────────────────────────────────┐
   │    │ OBTAIN STATE ESTIMATE WITH REGARD TO TOTAL ADSORPTION AMOUNT OF NH3 AND GAIN VALUE │~S36a
   │    └──────────────────┬───────────────────────┘
   │                       ↓
   │    ┌──────────────────────────────────────────┐
   │    │ OBTAIN POSTERIOR ERROR COVARIANCE MATRIX  │~S38
   │    └──────────────────┬───────────────────────┘
   │                       ↓
   │    ┌──────────────────────────────────────────┐
   │    │      CONTROL BY SUPPLY CONTROLLER         │~S40
   │    └──────────────────┬───────────────────────┘
   │                       │
   └───────────────────────┘
```

# Fig. 6

# Fig. 7

1d

10d

**CPU (11)**

**FIRST ESTIMATOR** ~110
(1)ADSORPTION AMOUNT OF NH₃
(2)OUTLET NOx CONCENTRATION
(3)OUTLET NH₃ CONCENTRATION

111d

**SECOND ESTIMATOR**
(4)ADSORPTION AMOUNT OF NH₃
(5)GAIN VALUE OF UREA EJECTION DEVICE

**STORAGE UNIT (12)**

**CATALYST STATE
ESTIMATION MODEL** ~120

| 1ST MODEL | ~121 |
| 2ND MODEL | ~122 |
| 3RD MODEL | ~123 |

61

SUPPLY
CONTROLLER

62

20

91

COMBUSTION STATE
CONTROLLER

92

INTERNAL
COMBUSTION
ENGINE

53 54

58

64

SCR
CATALYST

40

52    30

56

99

# Fig. 8

```
                    ┌─────────────┐
                    │    START    │
                    └──────┬──────┘
         ┌─────────────────┤                    ⌐S10
     ┌───┴───┐  ╱──────────────────────────────╲
     │  NO   │◁─  START CONDITION IS SATISFIED?  ╲
     │       │  ╲──────────────────────────────╱
     │       │              YES │◁──────────────────────────┐
     │       │   ┌──────────────┴──────────────────────┐    │
     │       │   │ OBTAIN FLOW RATE INSIDE OF EXHAUST PIPE │ ~S12
     │       │   └──────────────┬──────────────────────┘    │
     │       │   ┌──────────────┴──────────────────────┐    │
     │       │   │ OBTAIN AMOUNT OF NOx FLOWING INTO SCR CATALYST │ ~S14
     │       │   └──────────────┬──────────────────────┘    │
     │       │   ┌──────────────┴──────────────────────┐    │
     │       │   │ OBTAIN BED TEMPERATURE OF SCR CATALYST │ ~S16
     │       │   └──────────────┬──────────────────────┘    │
     │       │   ┌──────────────┴──────────────────────┐    │
     │       │   │ OBTAIN INPUT VARIABLES OF CATALYST STATE ESTIMATION MODEL │ ~S18
     │       │   └──────────────┬──────────────────────┘    │
     │       │   ┌──────────────┴──────────────────────┐    │
     │       │   │ OBTAIN AMOUNT OF NH3 FLOWING INTO SCR CATALYST │ ~S20
     │       │   └──────────────┬──────────────────────┘    │
     │       │   ┌──────────────┴──────────────────────┐    │
     │       │   │ OBTAIN PRIOR STATE ESTIMATE OF ADSORPTION AMOUNT OF NH3 │ ~S22
     │       │   └──────────────┬──────────────────────┘    │
     │       │   ┌──────────────┴──────────────────────┐    │
     │       │   │ OBTAIN PRIOR STATE ESTIMATE OF GAIN VALUE OF SUPPLY PORTION │ ~S24
     │       │   └──────────────┬──────────────────────┘    │
     │       │   ┌──────────────┴──────────────────────┐    │
     │       │   │ OBTAIN JACOBIANS                     │ ~S26
     │       │   └──────────────┬──────────────────────┘    │
     │       │   ┌──────────────┴──────────────────────┐    │
     │       │   │ OBTAIN PRIOR ERROR COVARIANCE MATRIX │ ~S28
     │       │   └──────────────┬──────────────────────┘    │
     │       │   ┌──────────────┴──────────────────────┐    │
     │       │   │ OBTAIN KALMAN GAIN                   │ ~S30d
     │       │   └──────────────┬──────────────────────┘    │
     │       │   ┌──────────────┴──────────────────────┐    │
     │       │   │ OBTAIN OBSERVATION VALUE OF OUTLET NOx CONCENTRATION ACQUIRER │ ~S32
     │       │   └──────────────┬──────────────────────┘    │
     │       │   ┌──────────────┴──────────────────────┐    │
     │       │   │ OBTAIN ESTIMATE OF OUTLET NOx CONCENTRATION ACQUIRER │ ~S34
     │       │   └──────────────┬──────────────────────┘    │
     │       │   ┌──────────────┴──────────────────────┐    │
     │       │   │ OBTAIN STATE ESTIMATE WITH REGARD TO ADSORPTION AMOUNT OF NH3 AND GAIN VALUE │ ~S36
     │       │   └──────────────┬──────────────────────┘    │
     │       │   ┌──────────────┴──────────────────────┐    │
     │       │   │ OBTAIN POSTERIOR ERROR COVARIANCE MATRIX │ ~S38
     │       │   └──────────────┬──────────────────────┘    │
     │       │   ┌──────────────┴──────────────────────┐    │
     └───────┘   │ CONTROL BY SUPPLY CONTROLLER        │ ~S40
                 └──────────────┬──────────────────────┘    │
                                └───────────────────────────┘
```

# Fig. 9

# Fig. 10

(A)

(B)

(C)

**EP 3 995 677 B1**

**REFERENCES CITED IN THE DESCRIPTION**

**Patent documents cited in the description**

- JP 2020185790 A
- JP 2021165891 A
- JP 2020504260 A
- US 8230677 B
- JP 2015081602 A
- JP 2003328732 A
- US 2018274419 A1
- DE 112013004471 T5
- DE 102016102436 A1